# EUROPÄISCHE PATENTSCHRIFT

(11) **EP 0 790 537 B1**
(45) Veröffentlichungstag und Bekanntmachung des Hinweises auf die Patenterteilung: **16.10.2002**
(21) Anmeldenummer: 97102578.8
(22) Anmeldetag: 18.02.1997
(51) Int. Cl.: G03G 15/16, G03G 13/20, G01D 13/04, G04B 19/10

(54) **Verfahren und Vorrichtung zur Herstellung eines Zifferblatts**
Method and apparatus for manufacturing a dial
Procédé et dispositif de fabrication d'un cadran

(30) Priorität: 19.02.1996 DE 19606069
(43) Veröffentlichungstag der Anmeldung: 20.08.1997
(73) Patentinhaber: WIKA ALEXANDER WIEGAND GmbH & CO., D-63911 Klingenberg (DE)
(72) Erfinder: Schneider, Alfred, Dipl.-Ing., 63924 Kleinheubach (DE); Schäfer, Klaus, Dipl.-Ing., 64732 Bad König (DE)
(74) Vertreter: Pellmann, Hans-Bernd, Dipl.-Ing.

(56) Entgegenhaltungen:
- EP-A- 0 339 244
- DE-A- 4 118 922
- DE-A- 4 418 663
- US-A- 4 797 714
- US-A- 5 322 268
- PATENT ABSTRACTS OF JAPAN vol. 018, no. 078 (P-1689), 8.Februar 1994 & JP 05 288872 A (SEIKO INSTR INC), 5.November 1993,

## Beschreibung

Die Erfindung betrifft ein Verfahren zur Herstellung eines Zifferblatts gemäß dem Oberbegriff des Patentanspruchs 1, bei dem ein Rohling mit einem Aufdruck versehen wird. Außerdem betrifft die Erfindung eine Vorrichtung zur Herstellung eines Zifferblatts durch Bedrucken eines Rohlings mit einem Aufdruck gemäß dem Oberbegriff des Patentanspruchs 14.

Es ist allgemein üblich, Zifferblätter durch Offsetdrucken mit einem Aufdruck zu versehen. Dabei wird zumindest ein Klischee erstellt, mit dem ein Rohling beispielsweise aus einem dünnen Blech bedruckt wird. Da der Aufwand für die Herstellung des Klischees und insbesondere mehrerer Klischees hoch ist, die für einen mehrfarbigen Druck benötigt werden, ist dieses Verfahren zwar für die Herstellung großer Auflagen geeignet, jedoch für die Herstellung von Zifferblättern mit abgeänderten Entwürfen in kleinen Auflagen unwirtschaftlich.

Aus der EP-A-0 339 244 bekannt ist ein Verfahren zum Übertragen eines aus zumindest zwei üblichen Druckfarben bestehenden sowie durch ein Druckverfahren auf einem flexiblen Flächenstück als Primärträger erzeugten Motivs in Form eines Bildes oder Schriftzuges auf einen flächigen Motivträger, insbesondere auf eine Leder-, Textil- oder Holzfläche, wobei die jenes Motiv aufnehmende Oberfläche des Motiv- oder Sekundärträgers mit jenem Motiv in flächigen Druckkontakt gebracht wird, bis das Motiv am Sekundärträger haftet, wonach der Primärträger am Motiv abgezogen wird. Das Motiv wird auf dem Primärträger in Form einer einseitig feuchtigkeitsdurchlässigen sowie auf der anderen Seite mit Kunststoff oder mit Lackfarbe beschichteten zellulosehaltigen Fläche mit Trockentoner-Farbe indirekt elektrostatisch reproduziert und vor Anwendung des Druckkontaktes trocken auf die Oberfläche des Sekundärträgers aufgelegt sowie dann erwärmt.

Aus der DE-40 23 760 C1 ist ein Verfahren zur Herstellung eines Meßgeräts zur Messung von Druck und Temperatur bekannt. Dabei wird die Skala durch ein Laser-Beschriftungsgerät auf das Zifferblatt geschrieben. Dieses bekannte Verfahren ermöglicht insbesondere, die Skalierung des Meßgeräts dem tatsächlichen Zeigerausschlag anzupassen. Grundsätzlich können mittels des Laser-Beschriftungsverfahrens Zifferblätter nur einzeln beschriftet werden. Dies erfordert ebenfalls einen verhältnismäßig hohen zeitlichen Aufwand, was eine effektive und preiswerte Fertigung sowohl von Standard-Zifferblättern in hohen Stückzahlen als auch von einzelnen Zifferblättern mit variablem Entwurf bisher verhindert hat. Ferner sind der graphischen Gestaltung des Zifferblatts durch Verwendung eines Laser-Beschriftungsgeräts enge Grenzen gesetzt, da das Zifferblatt praktisch nur einfarbig beschrieben werden kann.

Zifferblätter können außerdem durch Beschriften von Rohlingen mittels eines Plotters hergestellt werden. Dabei wird der Aufdruck, mit dem ein Rohling versehen werden soll, durch

Verwendung einer an den Plotter angeschlossenen Datenverarbeitungseinrichtung festgelegt. Mittels des Plotters wird der Aufdruck auf dem Rohling durch Tusche aufgebracht. Dieses Verfahren eignet sich trotz der relativ zeitaufwendigen Fertigung zwar für eine wirtschaftliche Fertigung von Zifferblättern in kleinen Stückzahlen, jedoch ist die Beständigkeit der hergestellten Zifferblätter gegenüber äußeren Einflüssen gering. Außerdem ist die Auflösung eines Plotters nicht besonders hoch und ein mehrfarbiges Beschriften mittels eines Plotters umständlich.

Kein bekanntes Verfahren zum Herstellen von Zifferblättern wie Offsetdrucken, Beschriften mittels eines Laser-Beschriftungsgeräts oder mittels eines Plotters ist hinsichtlich Qualität des Zifferblatts, Herstellungsdauer und -kosten gleichermaßen befriedigend. Insbesondere bei Stückzahlen von einigen hundert bis einigen tausend Zifferblättern ermöglichen die vorstehend beschriebenen Verfahren keine wirtschaftliche Fertigung der Zifferblätter. Eine Herstellung von Zifferblättern mittels Offsetdruck in großen Stückzahlen ist zwar vergleichsweise kostengünstig, bietet bei der Gestaltung und Änderung des Aufdrucks aber keine ausreichende Flexibilität.

Der Erfindung liegt daher die Aufgabe zugrunde, ein Verfahren und eine Vorrichtung zur Herstellung von Zifferblättern anzugeben, die einfach und kostengünstig sowie flexibel sind und deren Druckqualität bezogen auf Auflösung und Farben sowie Geschwindigkeit gegenüber herkömmlichen Verfahren wesentlich verbessert sind.

Hinsichtlich des Verfahrens wird die Aufgabe mit den Merkmalen des Anspruchs 1 sowie hinsichtlich der Vorrichtung mit den Merkmalen des Anspruchs 14 gelöst.

Erfindungsgemäß wird ein Verfahren zur Herstellung eines Zifferblatts geschaffen, bei dem ein Rohling mit einem Aufdruck versehen wird. Zunächst wird auf einem Trägerblatt ein vorfixiertes Tonerbild erzeugt, das spiegelverkehrt zu dem Aufdruck ist. Der zu bedruckende Rohling wird einer Anpreßeinrichtung zugeführt und in einer vorbestimmten Position ausgerichtet. Zur Anlage des Tonerbilds an dem Rohling wird das Trägerblatt in die Anpreßeinrichtung zugeführt und das Tonerbild in einer Position ausgerichtet, die der vorbestimmten Position des Rohlings entspricht. Daraufhin wird das ausgerichtete Tonerbild erweicht und an den Rohling angepreßt, wodurch das Tonerbild zur Bildung des Aufdrucks auf den Rohling übertragen wird. Schließlich wird das Trägerblatt von dem übertragenen Tonerbild abgezogen und das Zifferblatt aus der Anpreßeinrichtung entnommen.

Mit diesem Verfahren lassen sich Zifferblätter in hoher Qualität herstellen, deren Auflösung bis zu 6 * 10⁻⁵ m betragen kann. Da der übertragene Toner, aus dem das aufgedruckte Tonerbild besteht, üblicherweise widerstandsfähig gegenüber äußeren Einflüssen ist, weisen die fertig bedruckten Zifferblätter eine hohe Beständigkeit gegenüber ultravioletter Strahlung und Füllflüssigkeiten auf, mit denen Meßgeräte beispielsweise zur Dämpfung der Zeigerbewegung gefüllt sein können. Die Herstellungsdauer kann gegenüber bekannten Verfahren wesentlich verringert werden, da zum Ausführen des Verfahrens nur wenige Minuten erforderlich sind, so daß sich gegenüber herkömmlichen Verfahren auch geringere Kosten für die Herstellung eines derartigen Zifferblatts ergeben. Weil darüber hinaus Rohlinge aus einfachen Blechen als Ausgangsmaterial verwendet werden können, können die Herstellungskosten pro Zifferblatt weiter gesenkt werden. Weil das Erzeugen des Tonerbildes auf dem Trägerblatt mittels bekannter Druck- und Kopiergeräte vergleichsweise einfach ist, können auch kleine Losgrößen wirtschaftlich gefertigt werden, da beispielsweise im Gegensatz zum Offsetdruck die Herstellung von Klischees entfällt. Ein Umgang mit flüssigen Farben und Lösungsmitteln ist nicht erforderlich, denn sämtliche Farben werden in einem Druck übertragen. Aus diesem Grund wird ein Mehrfarbendruck wesentlich einfacher und umweltfreundlicher; zudem fallen im wesentlichen nur Papier- oder Folienabfälle von dem abgezogenen Trägerblatt an.

Die erfindungsgemäße Vorrichtung zur Herstellung eines Zifferblatts durch Bedrucken eines Rohlings mit einem Aufdruck weist eine Druckeinrichtung zum Erzeugen eines zu dem Aufdruck spiegelverkehrten, vorfixierten Tonerbildes auf einem Trägerblatt, eine Ausrichteinrichtung zum Ausrichten des Rohlings in einer vorbestimmten Position sowie des Tonerbilds in einer der vorbestimmten Position des Rohlings entsprechenden Position und eine Anpreßeinrichtung zum Ausüben einer Kraft in einer Richtung senkrecht zu der Ebene des Trägerblatts und des Rohlings und zum Anpressen des Tonerbildes an den Rohling auf.

Das mittels der erfindungsgemäßen Vorrichtung hergestellte Zifferblatt eignet sich für sämtliche Arten von Meßgeräten mit analogen Meßskalen. Seine Verwendung bietet sich besonders bei Temperatur- und insbesondere Druckmeßgeräten an, wenn mittlere Stückzahlen zwischen einigen hundert und einigen tausend Zifferblättern gefertigt werden sollen.

Außerdem offenbart die DE-41 18 922 C2 ein Verfahren zum Übertragen von Motiven von einer Originalvorlage auf einen Träger unter Verwendung eines Zwischenträgers durch gleichzeitige Anwendung von Wärme und Druck während eines bestimmten Zeitraums. Bei einem ersten Schritt wird ein das Motiv bildender Schriftzug mittels eines Laserkopiergeräts von einem Papierbogen als Originalvorlage auf eine Folie als Zwischenträger kopiert, wobei durch das Aufbringen von Toner auf dem Zwischenträger ein Tonerbild erzeugt wird. Bei einem sich daran anschließenden zweiten Schritt wird der Toner von einer Folie als Zwischenträger auf einen den Träger bildenden Hartkarton bei einem bestimmten Druck und einer bestimmten Temperatur mittels einer Übertragungsvorrichtung übertragen. Die Übertragungsvorrichtung weist eine Heizplatte und eine bezüglich der Heizplatte hydraulisch bewegbare Preßplatte auf. Dieses bekannte Verfahren ist bisher lediglich zum Beschriften von Verpackungen und Textilien angewendet worden.

Darüber hinaus werden bei diesem bekannten Verfahren keinerlei Maßnahmen zum Festlegen von Träger und Zwischenträger in der Übertragungsvorrichtung getroffen, so daß ein Verrutschen des Zwischenträgers relativ zu dem Träger während der Übertragung des Tonerbildes auf den Träger nicht verhindert werden kann. Dadurch kann eine zuverlässige Übertragung des Motivs von der Originalvorlage auf den Träger nicht gewährleistet werden.

Bei einer vorteilhaften Weiterbildung des erfindungsgemäßen Verfahrens werden Daten eingegeben, die eine zu erstellende und aus zumindest einem Muster bestehende Aufdruckvorlage definieren. Gespeicherte Muster werden zugeordnet und entsprechend den Daten, die die zu erstellende Aufdruckvorlage definieren, auf der Aufdruckvorlage positioniert. Ist ein Muster nicht gespeichert, wird ein neues Muster entworfen und gespeichert. Daraufhin werden die Aufdruckvorlage beschreibende Zeichnungsdaten ausgegeben und ein den Zeichnungsdaten entsprechendes, vorfixiertes Tonerbild auf dem Trägerblatt erzeugt.

Eine Vorrichtung gemäß einer vorteilhaften Weiterbildung der Erfindung weist zusätzlich unter anderem eine Eingabeeinrichtung zur Eingabe von Daten und eine Entwurfseinrichtung zum Entwurf eines Musters auf. Die mittels der Eingabeeinrichtung eingegebenen Daten definieren eine zu erstellende und aus zumindest einem Muster bestehende Aufdruckvorlage. Gespeicherte Muster werden durch eine Datenverwaltungseinrichtung zugeordnet und auf der Aufdruckvorlage entsprechend den Daten positioniert, die die zu erstellende Aufdruckvorlage definieren. Dabei fordert die Datenverwaltungseinrichtung bei einem nicht gespeicherten Muster einen entsprechenden Muster-Entwurf von der Entwurfseinrichtung an und speichert daraufhin das neu entworfene Muster. Eine Ausgabeeinrichtung gibt die Aufdruckvorlage beschreibende Zeichnungsdaten an die Druckeinrichtung aus, die ein den Zeichnungsdaten entsprechendes Tonerbild auf dem Trägerblatt erzeugt.

Auf diese Weise können zusätzlich zu den vorstehend beschriebenen Vorteilen durch die Verwendung von bereits bestehenden Einrichtungen Zifferblätter kostengünstig individuell gestaltet und dezentral erstellt werden. Eine Abänderung einer bereits bestehenden Aufdruckvorlage ist durch Laden des Musters aus der Datenverwaltungseinrichtung und Bearbeitung mittels der Entwurfseinrichtung leicht möglich. Weiterhin können Zifferblätter beispielsweise mit nichtlinearer Skala oder mit Mehrfachteilungen auch in kleinen Auflagen einfach hergestellt werden. Durch den zusätzlichen Einsatz einer elektronischen Abtasteinrichtung können außerdem digital abgetastete Bilder wie aus einzelnen Bildelementen bestehende Graphiken verarbeitet werden und in den Entwurf der Aufdruckvorlage eines Zifferblatts eingebunden werden.

Gemäß einer weiteren vorteilhaften Ausgestaltung der Erfindung ist die Anpreßeinrichtung durch eine Flachpresse gebildet, die ein Unterteil zur Aufnahme des Rohlings hat. Mittels dieser Einrichtung, die sich besonders für die Herstellung von Zifferblättern in kleinen Auflagen eignet, kann eine sehr genaue Ausrichtung des Rohlings und des Trägerblatts in der Flachpresse bewerkstelligt werden, so daß eine hohe Qualität des Zifferblatts sichergestellt ist.

Ein exaktes Positionieren und Festlegen des Rohlings in der Anpreßeinrichtung und des Trägerblatts auf dem Rohling bzw. in der Anpreßeinrichtung ist zum Erreichen eines korrekt angeordneten und ausgerichteten Aufdrucks auf dem eine Trägerplatte bildenden Rohling von größter Bedeutung. Wenn wie bei den herkömmlichen Verfahren keine exakte Positionierung des zu bedruckenden Gegenstands erfolgt, hängt die Genauigkeit der Deckung von Druckbild und zu bedruckendem Gegenstand von der Ausrichtung durch einen Benutzer ab. Dagegen kann erfindungsgemäß durch die genaue Positionierung des Rohlings und des Trägerblatts bezüglich der Anpreßeinrichtung mittels der Ausrichteinrichtung ein Versatz des Zifferblatt-Aufdrucks bezüglich der Trägerplatte verhindert werden. Zudem werden wie nachstehend beschrieben sowohl der Rohling als auch das Trägerblatt während der Übertragung des Toners auf den Rohling festgelegt, so daß eine Verschiebung des Rohlings und des Trägerblatts bezüglich des jeweils anderen während der Übertragung nicht erfolgen kann.

Die Anpreßeinrichtung gemäß einem zweiten Ausführungsbeispiel der Erfindung ist durch mindestens ein Paar einander gegenüberliegend angeordnete Preßwalzen gebildet. In einen Spalt, der zwischen den zwei Preßwalzen gebildet ist, wird der Rohling mit dem darauf ausgerichteten Tonerbild auf einer Halteplatte eingeführt, indem die Halteplatte von den sich drehenden Walzen mitgenommen und in den Spalt eingezogen wird.

Mittels der Preßwalzen wird das zu dem Aufdruck spiegelverkehrte, vorfixierte Tonerbild erweicht. Das anschließende Anpressen bewirkt, daß das Tonerbild von dem Trägerblatt auf den Rohling übergeht. Diese Ausgestaltung bietet sich-insbesondere zum Einsatz bei einer automatisierten Fertigung an, da auf manuelle Eingriffe weitgehend verzichtet werden kann. Das Tonerbild kann vorteilhafterweise von einer Endlos-Trägerblattrolle der Preßwalze zugeführt werden. Dadurch ist die Geschwindigkeit der Herstellung von Zifferblättern gegenüber dem ersten Ausführungsbeispiel erhöht, so daß die Herstellausbeute und damit die Wirtschaftlichkeit der Fertigung gesteigert werden.

Gemäß einem dritten Ausführungsbeispiel der Erfindung ist die Anpreßeinrichtung durch ein Unterteil zur Aufnahme des Rohlings und mindestens eine dem Unterteil gegenüberliegend angeordnete Preßwalze gebildet. Das Unterteil dieser Anpreßeinrichtung kann beispielsweise wie das Unterteil der Flachpresse gemäß dem ersten Ausführungsbeispiel aufgebaut sein. Wie das zweite Ausführungsbeispiel eignet sich auch das dritte Ausführungsbeispiel besonders für eine automatisierte Massenfertigung von Zifferblättern, denn durch die Verwendung der Preßwalze ergibt sich auch in diesem Fall eine hohe Herstellungsgeschwindigkeit. Ebenso ist wie bei dem zweiten Ausführungsbeispiel auch bei dem dritten Ausführungsbeispiel eine sehr feine Dosierung des Anpreßdrucks und dadurch dessen gleichmäßige Verteilung möglich, weil durch die Preßwalzen eine Linienpressung anstelle der durch die Flachpresse bewirkten Flächenpressung erfolgt. Da jedoch nur eine Preßwalze benötigt wird, zeichnet sich das dritte Ausführungsbeispiel darüber hinaus durch eine besonders kompakte und platzsparende Bauweise aus.

Gemäß einer weiteren bevorzugten Ausgestaltung der Erfindung weist die Vorrichtung eine Einrichtung zum Wärmebehandeln des bedruckten Zifferblatts auf. Dabei wird das Zifferblatt für einen vorbestimmten Zeitraum einer erhöhten Temperatur ausgesetzt. Während dieser Wärmebehandlung liegt die mit dem Aufdruck versehene Oberfläche des Zifferblatts frei. Dadurch wird der Aufdruck in die Oberfläche des die Trägerplatte bildenden Rohlings eingebrannt, so daß die Haftung des Toners auf der Oberfläche der Trägerplatte optimiert und außerdem die Beschaffenheit der Zifferblattoberfläche verbessert wird. Insbesondere durch diese sich dem Herstellungsverfahren anschließende Wärmebehandlung wird eine sehr hohe Beständigkeit des Zifferblatts gegen sowohl in dem Meßgerät vorhandene Füllmedien als auch äußere Umwelteinflüsse erreicht. Daher bietet sich diese Ausgestaltung der Erfindung insbesondere für Kontaktmeßgeräte an.

In den übrigen Unteransprüchen sind weitere vorteilhafte Ausgestaltungen der Erfindung angegeben.

Die Erfindung wird nachstehend anhand von Ausführungsbeispielen unter Bezugnahme auf die Zeichnung näher beschrieben. Es zeigen:
Fig. 1 eine Draufsicht auf ein mittels des erfindungsgemäßen Verfahrens hergestelltes Zifferblatt,
Fig. 2 eine Draufsicht auf ein Trägerblatt mit mehreren verschiedenen Beispielen für vorfixierte Tonerbilder,
Fig. 3 ein beispielhaftes Flußdiagramm des Verfahrensablaufs,
Fig. 4 eine beispielhafte Gesamtanordnung der erfindungsgemäßen Vorrichtung aus mehreren Funktionseinheiten,
Fig. 5 ein beispielhaftes Flußdiagramm für eine Erzeugung eines Tonerbilds, wobei Fig. 5A einen allgemeinen Überblick über das Verfahren zum Erzeugen eines Tonerbilds gibt und Fig. 5B das gesamte erfindungsgemäße Verfahren zur Herstellung eines Zifferblatts in Einzelheiten darstellt,
Fig. 6 eine schematisierte Perspektivdarstellung einer Anpreßeinrichtung in Form einer Flachpresse gemäß einem Ausführungsbeispiel,
Fig. 7 einen Längsschnitt durch ein Beispiel für ein Unterteil der Flachpresse,
Fig. 8 einen Längsschnitt durch ein Beispiel für einen Führungsstift, der von einer in dem Unterteil der Flachpresse vorgesehenen Bohrung aufgenommen werden kann,
Fig. 9 eine beispielhafte Draufsicht auf ein Unterteil der in Fig. 6 dargestellten Flachpresse,
Fig. 10 einen Längsschnitt durch eine Anpreßeinrichtung gemäß einem anderen Ausführungsbeispiel und
Fig. 11 einen Längsschnitt durch eine Anpreßeinrichtung gemäß einem weiteren Ausführungsbeispiel.

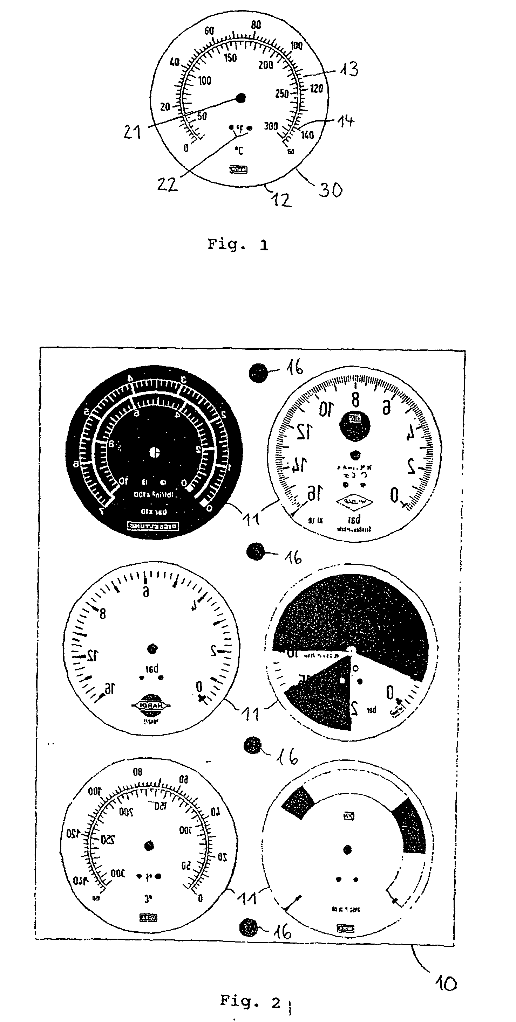

Mittels des erfindungsgemäßen Verfahrens und der Vorrichtung kann ein Zifferblatt 30 hergestellt werden, wie es in Fig. 1 beispielhaft dargestellt ist. Das Zifferblatt 30 weist eine Trägerplatte und einen an einer der beiden Oberflächen der Trägerplatte angebrachten Aufdruck 12 auf, der durch ein übertragenes Tonerbild gebildet ist. Die Trägerplatte, die in Fig. 1 durch den Aufdruck 12 verdeckt ist, ist durch einen Rohling gebildet und kann beispielsweise aus einem Kunststoff oder einem Metall wie vorzugsweise einem gestanzten Metallblech hergestellt sein. Der Aufdruck 12 umfaßt eine auf einer Grundierung aufgebrachte ringförmige Skala 13, die entlang des Randes des kreisförmigen Aufdrucks 12 verläuft und in einer anderen Farbe als der der Grundierung gebildet ist. Die Skala 13 setzt sich aus Markierungen in Form von Skalenstrichen 14 und einige den Skalenstrichen 14 zugeordneten Maßzahlen zusammen. Ferner ist der Aufdruck 12 mit weiteren Angaben versehen, nämlich den Einheitenzeichen "°C" bzw. "°F" sowie darunter einer Herstellerangabe. Das Zifferblatt 30 weist außerdem in seiner Mitte eine es durchdringende Bohrung 21 zur Aufnahme einer Zeigerwelle und zwei unterhalb der Bohrung 21 angeordnete Bohrungen 22 auf, die ebenfalls das Zifferblatt 30 durchdringen.

Das vorstehend beschriebene, mittels des erfindungsgemäßen Verfahrens hergestellte Zifferblatt kann im Prinzip bei allen Arten von Meßgeräten zur Messung von beliebigen Größen zur Anwendung kommen. Obwohl das als Beispiel gezeigte Zifferblatt für ein Thermometer bestimmt ist, eignen sich derart hergestellte Zifferblätter auch besonders zur Verwendung bei Manometern.

Vorstehend wurde ein kreisförmiges Zifferblatt 30 bzw. ein kreisförmiger Aufdruck 12 beschrieben. Der Aufdruck 12 kann jedoch nicht nur verschiedene Durchmesser, sondern auch beispielsweise eine rechteckige Form und eine Form mit unsymmetrischen Außenkonturen aufweisen. Außerdem ist der Aufdruck nicht auf die vorstehend beschriebene Ausgestaltung beschränkt, sondern kann beispielsweise entsprechend Fig. 2 ausgebildet sein, die ein Trägerblatt 10 mit sechs verschiedenen Beispielen für vorfixierte Tonerbilder 11 zeigt, die spiegelverkehrt zu den ihnen entsprechenden Aufdrücken sind. Das Trägerblatt 10 kann beispielsweise aus Papier oder Folie hergestellt sein. Außerdem ist das Trägerblatt 10 zum Ausrichten des Trägerblatts 10 in einer Anpreßeinrichtung mit mehreren Löchern 16 versehen, die an der Anpreßeinrichtung vorgesehene Führungsstifte aufnehmen.

Die auf dem Trägerblatt 10 angeordneten Tonerbilder 11 können alle auf dieselbe Weise ausgestaltet sein oder, wie in Fig. 2 dargestellt, verschiedenartig sein. Selbstverständlich kann auch anstelle der vorstehend beschriebenen sechs Tonerbilder 11 irgendeine andere Anzahl von Tonerbildern in entsprechender Weise auf dem Trägerblatt 10 angeordnet sein. Darüber hinaus kann das Trägerblatt 10 zum Ausrichten in der Anpreßeinrichtung anstelle der Löcher 16 Fadenkreuze aufweisen, die beim Erzeugen der Tonerbilder 11 mit auf dem Trägerblatt 10 aufgebracht werden. Mittels dieser Fadenkreuze kann die Ausrichtung des Trägerblatts 10 in der Anpreßeinrichtung auf optische Weise erfolgen.

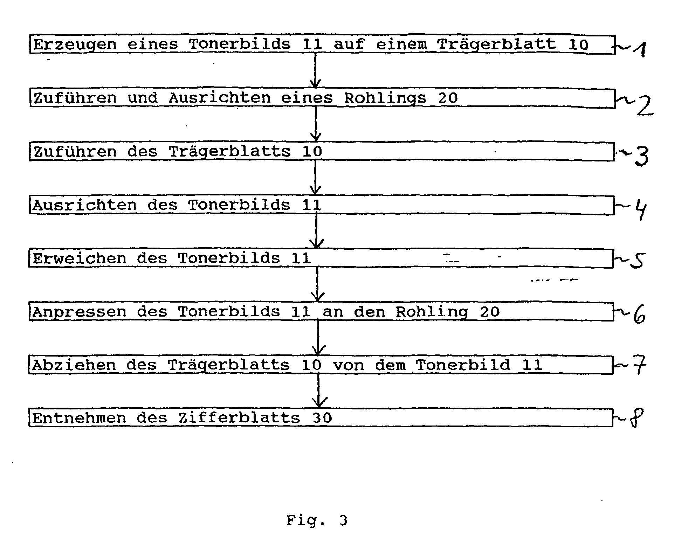

In Fig. 3 ist der allgemeine Ablauf des erfindungsgemäßen Verfahrens zum Herstellen eines Zifferblatts durch Bedrucken eines Rohlings mit einem Aufdruck dargestellt. Zunächst wird eine Aufdruckvorlage erzeugt, die einer Druckeinrichtung zugeführt wird. Die Druckeinrichtung erzeugt in einem Sehritt 1 gemäß Fig. 3 ein vorfixiertes, zu dem Aufdruck spiegelverkehrtes Tonerbild 11 auf einem Trägerblatt 10 entsprechend der Aufdruckvorlage. In einem Schritt 2 wird der beispielsweise aus einem Blech mit kreisförmigen Querschnitt bestehende, zu bedruckende Rohling 20 einer Anpreßeinrichtung zugeführt und mittels einer Ausrichteinrichtung in einer vorbestimmten Position ausgerichtet. Daraufhin wird in einem Schritt 3 das Trägerblatt 10 der Anpreßeinrichtung zugeführt und das Tonerbild 11 auf den Rohling 20 gelegt. Dadurch wird das Tonerbild 11 mittels der Ausrichteinrichtung in einer Position ausgerichtet, die der vorbestimmten Position des Rohlings 20 entspricht. Auf verschiedene Verfahren und Einrichtungen zum Ausrichten des Rohlings 20 und des Tonerbilds 11 wird nachstehend ausführlich eingegangen. Das Tonerbild 11 wird in einem Schritt 5 erweicht und in einem Schritt 6 an den Rohling 20 angepreßt, indem eine Kraft senkrecht zu der Ebene des Trägerblatts 10 und des Rohlings 20 ausgeübt wird. Das Tonerbild 11 geht von der Oberfläche des Trägerblatts 10 auf die Oberfläche des Rohlings 20 über und haftet an dieser, weil das Tonerbild 11 an der Oberfläche des Rohlings 20 verglichen mit dem Trägerblatt 20 bevorzugt haftet. Schließlich wird in einem Schritt 7 das Trägerblatt 10 von dem übertragenen Tonerbild 11 abgezogen, und in einem Schritt 8 wird das Zifferblatt 30 aus der Anpreßeinrichtung entnommen. Zum Zuführen des Rohlings 20 und des Trägerblatts 10 sowie zum Entnehmen des Zifferblatts 30 kann die Anpreßeinrichtung mindestens in die Richtung senkrecht zu der Ebene des Trägerblatts 10 und des Rohlings 20 bewegbar sein.

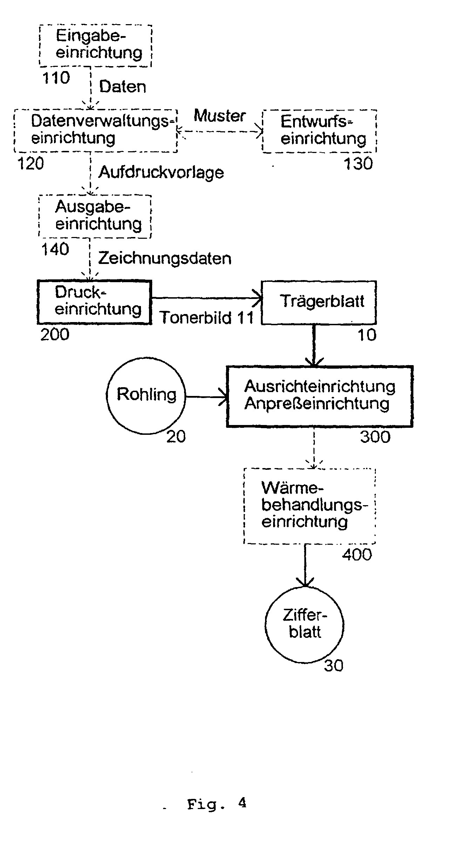

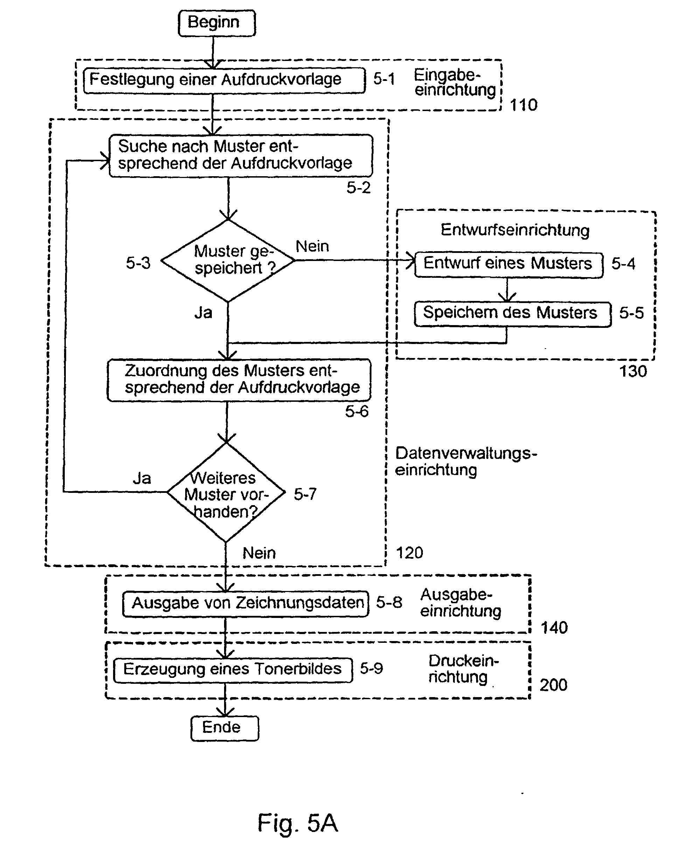

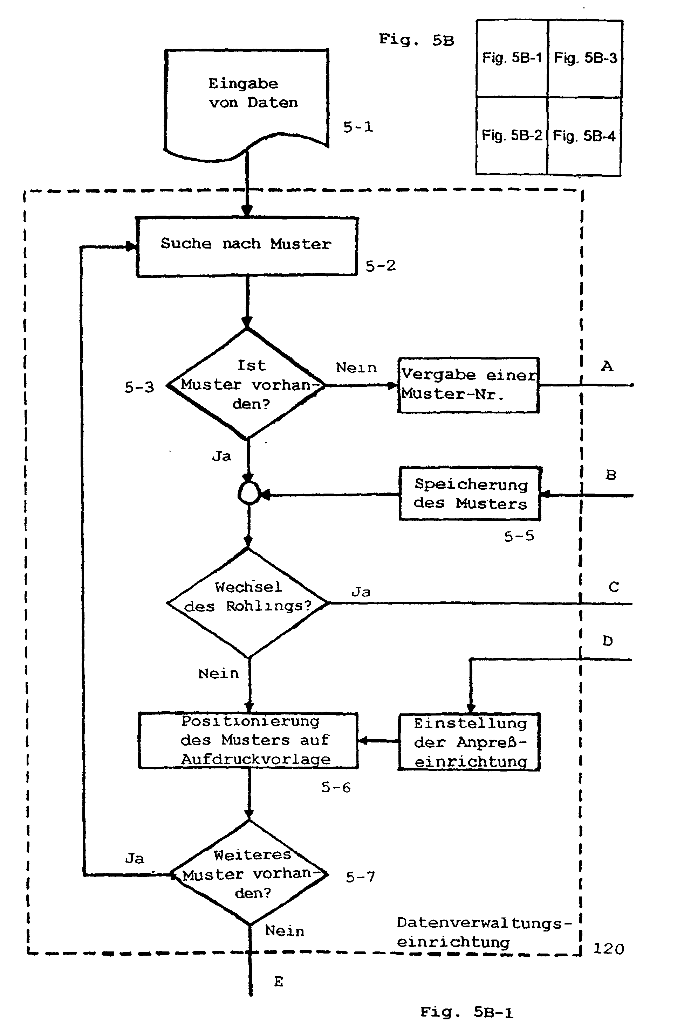

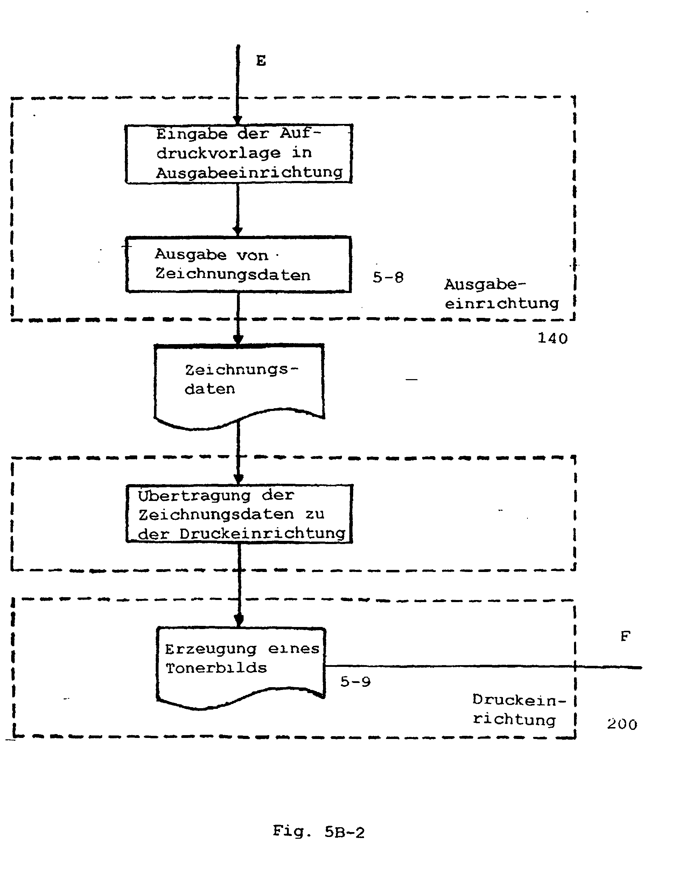

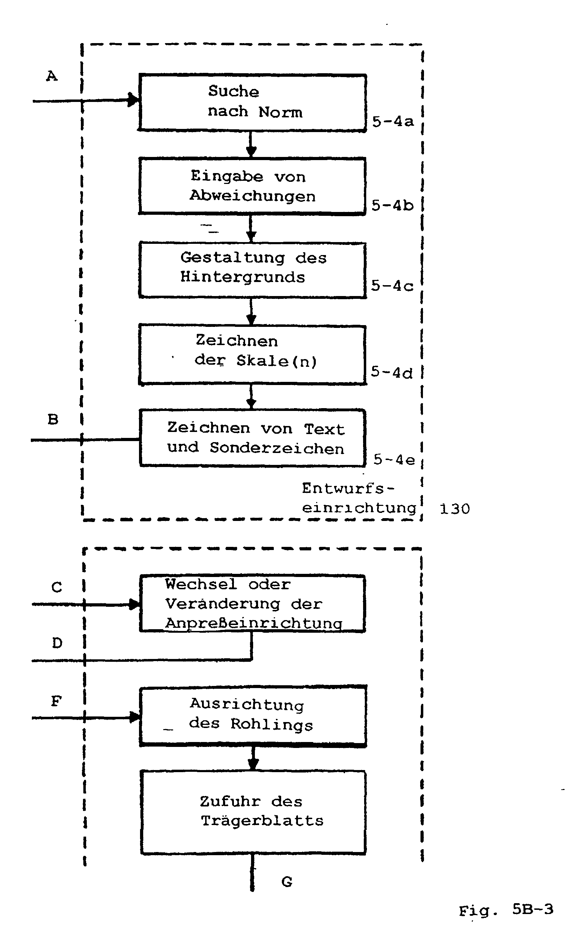

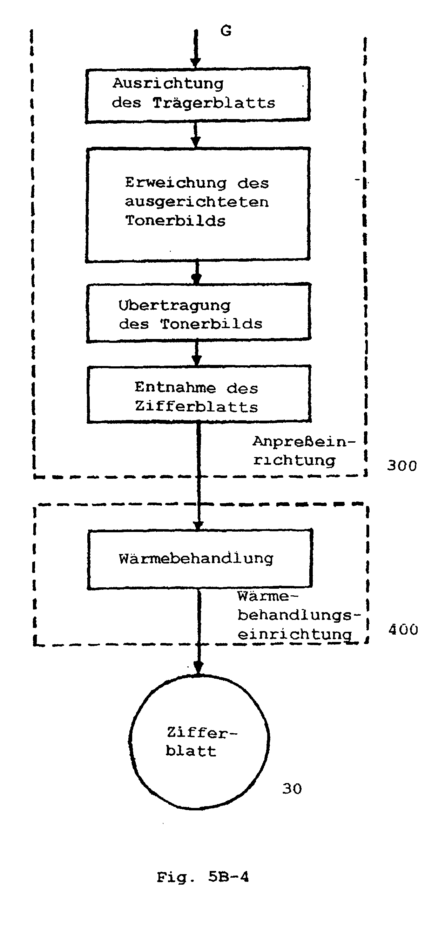

Nachstehend wird anhand von Fig. 4 und 5 beispielhaft die Erzeugung des Tonerbilds näher beschrieben. Fig. 4 zeigt eine beispielhafte Anordnung der erfindungsgemäßen Vorrichtung aus mehreren Funktionseinheiten. Fig. 5A zeigt ein Flußdiagramm, das die wesentlichen Schritte der Erzeugung des Tonerbilds 11 auf dem Trägerblatt 10 darstellt, während aus Fig. 5B sämtliche Schritte des gesamten Verfahrens zur Herstellung des Zifferblatts ersichtlich sind.

Zunächst werden in einem Schritt 5-1 gemäß Fig. 5 mittels einer Eingabeeinrichtung 110 Daten eingegeben, die eine zu erstellende Aufdruckvorlage definieren. Die Aufdruckvorlage besteht aus mindestens einem Muster für ein Tonerbild. Entsprechend den Daten führt eine Datenverwaltungseinrichtung 120 in einem Schritt 5-2 eine Suche nach einem bestimmten Muster durch. In einem Schritt 5-3 wird unterschieden, ob das bestimmte Muster gespeichert ist. Ist das Muster nicht gespeichert, wird zunächst gemäß Fig. 5B eine Muster-Nummer vergeben und anschließend zu einem Schritt 5-4 verzweigt, in dem mittels einer Entwurfseinrichtung 130 ein Muster neu entworfen wird. Dabei wird im einzelnen in einem Schritt 5-4a eine Suche nach einer Norm ausgeführt, auf Grundlage der ein Muster entworfen werden soll. In einem Schritt 5-4b werden die Abweichungen des zu entwerfenden Musters von der Norm eingegeben. Nachdem der Hintergrund des Zifferblatt-Entwurfs gestaltet worden ist (Schritt 5-4c), werden in einem Schritt 5-4d eine oder mehrere Skalen auf dem Zifferblatt-Entwurf abgebildet. Zum Abschluß des Muster-Entwurfs werden in einem Schritt 5-4e Text und Sonderzeichen in den Muster-Entwurf aufgenommen und abgebildet, so daß der Muster-Entwurf in einem Schritt 5-5 gespeichert werden kann. Mittels der Entwurfseinrichtung 130 kann auch ein Bild in die Aufdruckvorlage eingefügt werden. In diesem Fall wird durch den Einsatz beispielsweise einer digitalen Abtasteinrichtung wie eines Scanners ein gewünschtes Bild abgetastet und in die Aufdruckvorlage zum Erzeugen des Tonerbilds eingefügt. Gemäß Fig. 5B wird dann geprüft, ob ein in der Anpreßeinrichtung 300 vorhandener Rohling 20 ausgetauscht werden soll. Ist dies der Fall, so wird die Anpreßeinrichtung 300 entsprechend verändert und eingestellt. Das bereits vorab gespeicherte oder neu entworfene Muster wird in einem Schritt 5-6 durch die Datenverwaltungseinrichtung 120 zugeordnet und auf der Aufdruckvorlage positioniert. In einem Schritt 5-7 wird überprüft, ob weitere Muster vorhanden sind, die auf der Aufdruckvorlage angeordnet werden sollen. Ist dies der Fall, so wird zu dem Schritt 5-2 zur Suche des entsprechenden Musters zurück verzweigt. Im Anschluß daran werden die vorstehend beschriebenen Schritte 5-3 bis 5-6 für das nächste Muster wiederholt. Sind jedoch keine weiteren Muster vorhanden, die auf der Aufdruckvorlage anzuordnen sind, wird die Aufdruckvorlage in eine Ausgabeeinrichtung 140 eingegeben, die in einem Schritt 5-8 die Aufdruckvorlage beschreibende Zeichnungsdaten in Form einer Datei ausgibt. Die Zeichnungsdaten, die in einer Seitenbeschreibungssprache wie beispielsweise "Postscript" (eingetragenes Warenzeichen der Fa. Adobe Systems, Inc.) abgelegt sein können, werden zu der Druckeinrichtung 200 zur Erzeugung eines Tonerbildes übertragen. Die Druckeinrichtung 200 kann beispielsweise ein Laserdrucker, ein Tintenstrahldrucker oder ein Kopierer sein, die schwarzweiße und/oder farbige Ausdrucke erzeugen können. Die Druckeinrichtung 200 erzeugt in einem Schritt 5-9 auf dem Trägerblatt 10 mindestens ein zu dem Aufdruck spiegelverkehrtes, vorfixiertes Tonerbild 11 entsprechend der Aufdruckvorlage bzw. den sie beschreibenden Zeichnungsdaten.

Die in Fig. 5B dargestellten weiteren Schritte des Verfahrens zur Herstellung eines Zifferblatts entsprechen mit Ausnahme der optionalen Wärmebehandlung den bereits in Verbindung mit Fig. 3 beschriebenen Schritten 2 bis 8, so daß deren Beschreibung an dieser Stelle entfällt.

Es ist ebenfalls möglich, daß ein Tonerbild nicht wie in Fig. 5A dargestellt, sondern beispielsweise von Hand erzeugt wird, wobei die Aufdruckvorlage auf einem Träger wie beispielsweise einem Blatt Papier oder einer Folie aufgebracht ist. In diesem Fall erzeugt ein Kopierer 200 das Tonerbild 11 entsprechend der Aufdruckvorlage, die dem Kopierer 200 zugeführt wird.

Es sei bemerkt, daß in Fig. 4 die Einrichtungen der erfindungsgemäßen Vorrichtung durch stark umrandete Blöcke dargestellt sind, während schwach umrandete Teile der Figur Zwischen- oder Endprodukte des erfindungsgemäßen Verfahrens angeben. Gestrichelt umrandete Blöcke stellen optionale Einrichtungen der erfindungsgemäßen Vorrichtung dar.

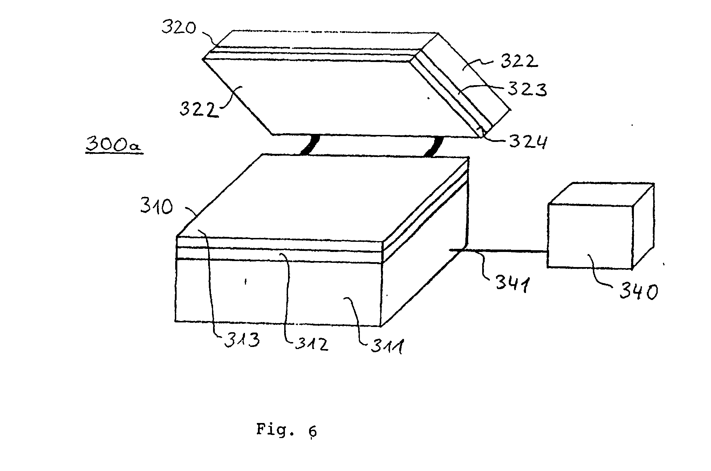

Fig. 6 zeigt eine schematisierte Perspektivdarstellung einer Anpreßeinrichtung gemäß einem ersten Ausführungsbeispiel, die als Flachpresse 300a ausgebildet ist. Die Flachpresse 300a ist in Fig. 6 in geöffnetem Zustand dargestellt. Wie aus Fig. 6 ersichtlich ist, besteht die Flachpresse 300a aus einem Unterteil 310 und einem auf das Unterteil 310 aufsetzbaren Oberteil 320, das an dem Unterteil 310 beispielsweise durch Scharniere verschwenkbar angebracht sein kann. Das Trennen des Oberteils 320 von dem Unterteil 310 der Flachpresse 300a ist außer durch Verschwenken des Oberteils 320 bzw. des Unterteils 310 auch durch eine translatorische Bewegung wie einem Anheben des Oberteils 320 von dem Unterteil 310 möglich. Das Unterteil 310 weist eine Grundplatte 311 zum Aufstellen des Unterteils 310 auf einem Untergrund auf, die beispielsweise aus Aluminium besteht. Die Grundplatte 311 ist mit einer Dämpfungsschicht 312 wie beispielsweise einer Gummimatte bedeckt, die zum Ausgleichen von Unebenheiten der Grundplatte 311 und dadurch zur gleichmäßigen Übertragung des Toners auf den Rohling 20 dient. Die Dämpfungsschicht 312 ist wiederum mit einer unteren Trennschicht 313 abgedeckt, die ebenfalls Unebenheiten der Grundplatte 311 ausgleicht. Durch die Anordnung der Dämpfungsschicht 312 und der unteren Trennschicht 313 auf der Grundplatte 311 kann die Übertragung von Wärme und Druck vergleichmäßigt werden, so daß eine Steigerung der Druckqualität des Zifferblatts erreicht wird. Die untere Trennschicht 313 besteht beispielsweise aus Polytetrafluoräthylen (PTFE, Handelsname: Teflon) und dient auch zur Wärmeisolation. Die untere Trennschicht 313, die Dämpfungsschicht 312 und die Grundplatte 311 sind mit Bohrungen versehen, in die an der Grundplatte 311 vorgesehene Führungsstifte eingesetzt sind. Die Führungsstifte greifen zum Ausrichten des der Flachpresse 300a zugeführten Rohlings 20 in einer vorbestimmten Position in die den Rohling 20 durchdringende Bohrungen 21 ein. Die Führungsstifte sind in das Unterteil 310 der Flachpresse 300a versenkbar und stehen in Richtung ihrer Eingriffsstellung senkrecht zur Hauptebene des Rohlings 20 und des Trägerblatts 10 unter Federvorspannung. Dazu sind die Führungsstifte zur Aufnahme in dem Unterteil 310 der Flachpresse 300a mittels nicht dargestellter Federn vorgespannt. Die Wahl der Vorspannung hängt davon ab, ob zum Kompensieren der Federkraft ein Überdruck oder ein Unterdruck verwendet wird. Dies wird nachstehend ausführlich erläutert. Die Führungsstifte können auch anstatt der Verwendung von Federn in Richtung ihrer Eingriffsstellung pneumatisch beaufschlagt werden.

Gemäß einer Ausgestaltung der Erfindung können einige der Führungsstifte auch zum Ausrichten des Trägerblatts 10 dienen, das auf den Rohling 20 gelegt wird. Dazu greifen diese Führungsstifte durch die Bohrungen 22 des Rohlings 20 hindurch in die Löcher 16 des Trägerblatts 10 ein. Dadurch kann eine hochgenaue Positionierung sowohl des Trägerblattes 10 als auch des Rohlings 20 in der Flachpresse 300a erreicht werden.

Die Führungsstifte können beim Ausrichten des Rohlings 20 mittels eines Überdrucks, der in einer an die Bohrungen der Führungsstifte angeschlossenen und nachstehend als Druckleitung 341 bezeichneten Leitung erzeugt wird, gegen die Federkraft der vorstehend erwähnten Federn aus den Bohrungen herausbewegt werden. In diesem Fall sind die Federn in der Richtung von dem Oberteil 320 zu dem Unterteil 310 der als geschlossen gedachten Flachpresse 300a vorgespannt. Dabei ist die Druckleitung 341 an einen Druckerzeuger 340 angeschlossen, der den Überdruck erzeugt. Außerdem ist die untere Trennschicht 313 mit weiteren Bohrungen als Ansaugbohrungen versehen, die ebenfalls über die Druckleitung 341 an den Druckerzeuger 340 angeschlossen sind. Mittels dieser Ansaugbohrungen wird der ausgerichtete Rohling 20 durch einen Unterdruck auf die untere Trennschicht 313 gesaugt und dadurch in der vorbestimmten Position auf dem Unterteil 310 der Flachpresse 300a festgehalten. Dann wird das Trägerblatt 10 mit dem Tonerbild 11 und mindestens zwei Löchern 16 der Flachpresse 300a derart zugeführt, daß die Führungsstifte des Unterteils 310 der Flachpresse 300a in die entsprechenden Löcher 16 des Trägerblatts 10 eingreifen, so daß das Trägerblatt 10 mit den Tonerbildern 11 in einer der vorbestimmten Position des Rohlings 20 entsprechenden Position ausgerichtet wird.

Das Oberteil 320 der Flachpresse 300a weist eine Heizplatte 322 auf, die von außen zugeführte elektrische Energie in Wärmeenergie umwandelt und zum Erwärmen des Trägerblatts 10 dient. Außerdem ist eine Ausgleichsschicht 324 wie beispielsweise eine Auflage aus einem Baumwollgewebe zum Abdecken des ausgerichteten Trägerblatts 10 vorgesehen, die Unebenheiten des Trägerblatts 10 und des Rohlings 20 egalisiert und dadurch den Druck zwischen dem Oberteil 320 und dem Unterteil 310 der Flachpresse 300a vergleichmäßigt. Gleichzeitig wird die Temperatur zwischen dem Oberteil 320 und dem Unterteil 310 gleichmäßig gemacht, denn beispielsweise den Temperaturübergang behindernde Lufteinschlüsse werden dadurch beseitigt. Dadurch wird die Qualität des bedruckten Zifferblatts weiter verbessert. Außerdem nimmt die Ausgleichsschicht 324 beim Erwärmen des Trägerblatts 10 entstehende Flüssigkeiten und Dämpfe auf und stellt auf diese Weise eine gleichbleibende Druckqualität sicher. Zwischen der Heizplatte 322 und der Ausgleichsschicht 324 ist außerdem eine obere Trennschicht 323 vorgesehen, die ein Haften der Ausgleichsschicht 324 an der Heizplatte 322 verhindert. Wie die untere Trennschicht 313 des Unterteils 310 der Flachpresse 300a kann auch die obere Trennschicht 323 aus Polytetrafluoräthylen (PTFE) hergestellt sein.

Zum Schließen der Flachpresse 300a wird das Oberteil 320 auf das Unterteil 310 gesetzt. Dann wird zum Anpressen des Trägerblatts 10 an den Rohling 20 eine Kraft senkrecht zu der Ebene des Trägerblatts 10 und des Rohlings 20 ausgeübt, die beispielsweise die Kraft des Eigengewichts des Oberteils 320 der Flachpresse 300a sein kann. Gleichzeitig wird die Heizplatte 322 für einen vorbestimmten Zeitraum mit elektrischer Energie gespeist, so daß das Trägerblatt 10 über die Heizplatte 322 erwärmt und dadurch das Tonerbild 11 auf dem Trägerblatt 10 erweicht wird. Vorteilhafterweise beträgt für einen Zeitraum von 30 s die Temperatur zum Erweichen des Tonerbilds 11 100 °C. Durch das Anpressen des Tonerbilds 11 an den Rohling 20 wird das Tonerbild 11 auf den Rohling 20 übertragen und auf ihm fixiert, so daß das Trägerblatt 10 von dem übertragenen Tonerbild 11 abgezogen und das Zifferblatt 30 aus der Flachpresse 300a entnommen werden kann.

Anstelle der Bohrungen für die Führungsstifte zum Ausrichten des Rohlings 20 in der vorbestimmten Position kann die untere Trennschicht 313 auch Ausnehmungen aufweisen, in denen zu bedruckende Rohlinge gegen einen Anschlag ausgerichtet werden. Dies ist insbesondere für Rohlinge mit unsymmetrischer Außenkontur vorteilhaft. Selbstverständlich ist auch eine Kombination von derartigen Ausnehmungen mit den vorstehend beschriebenen Führungsstiften zur Ausrichtung der Rohlinge und Trägerblätter in der Anpreßeinrichtung möglich und insbesondere dann sinnvoll, wenn eine besonders hohe Positioniergenauigkeit verlangt wird.

Weiterhin kann das Trägerblatt 10 anstelle der Löcher 16 mit mindestens einem Fadenkreuz versehen sein, das beim Erzeugen des Tonerbilds 11 zusammen mit diesem auf dem Trägerblatt 10 aufgebracht wird. In diesem Fall ist die untere Trennschicht 313 zusätzlich mit mindestens einem Fadenkreuz versehen, das durch eine entsprechende, unterhalb der unteren Trennschicht 313 in dem Unterteil 310 der Flachpresse 300a vorgesehene, in Fig. 6 nicht dargestellte Lampe beleuchtet wird. Beim Ausrichten des Trägerblatts 10 bzw. des Tonerbilds 11 auf dem Rohling 20 in der vorbestimmten Position werden das auf dem Trägerblatt 10 vorgesehene Fadenkreuz und das auf der unteren Trennschicht 313 vorgesehene Fadenkreuz miteinander in Deckung gebracht. Diese Ausrichtung mittels Fadenkreuzen kann sowohl manuell als auch durch den Einsatz einer entsprechenden optoelektronischen Steuereinheit erfolgen, die beispielsweise mehrere Leuchtdioden und Phototransistoren zum Erfassen der auf der unteren Trennschicht 313 und auf dem Trägerblatt 10 angebrachten Fadenkreuze, eine Auswertelektronik sowie eine Anzeigeeinheit aufweist. Die Auswertelektronik verarbeitet Signale, die aus den den Leuchtdioden gegenüberliegenden Phototransistoren ausgegeben werden, und gibt entsprechende Signale zur Anzeige auf der Anzeigeeinheit aus, die einen Benutzer beispielsweise auf optische oder akustische Weise von der Ausrichtung des Trägerblatts 10 bezüglich der unteren Trennschicht 313 in Kenntnis setzt.

Alternativ können die Führungsstifte nach dem Ausrichten des Rohlings 20 und des Trägerblatts 10 in der vorbestimmten Position auch mittels eines durch den Druckerzeuger 340 erzeugten Unterdrucks in das Unterteil 310 der Flachpresse 300a oder mittels Elektromagneten eingezogen werden. Da der Einzug der Führungsstifte in das Unterteil 310 der Flachpresse 300a gegen die Federkraft der vorstehend erwähnten Federn erfolgt, sind die Führungsstifte in diesem Fall zum Vorstehen aus dem Unterteil 310 vorgespannt.

Es sei bemerkt, daß in Fig. 6 zur besseren Übersichtlichkeit der Darstellung sowohl die Dicke der Schichten 312 und 313 als auch die der Schichten 323 und 324 nicht maßstabsgerecht dargestellt ist.

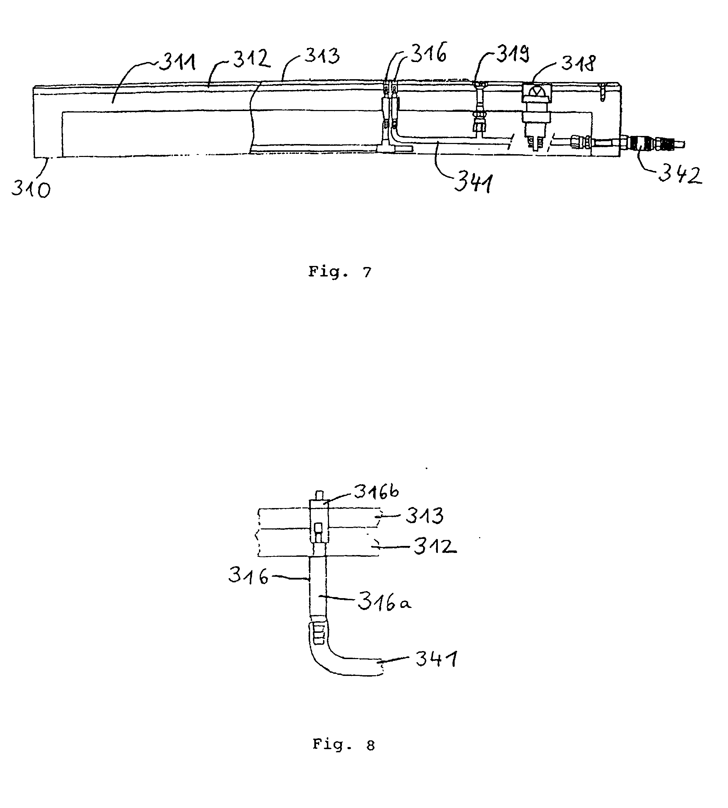

Fig. 7 stellt einen Längsschnitt durch ein Beispiel für das Unterteil 310 der Flachpresse 300a dar. In Fig. 7 sind gleiche oder entsprechende Teile wie die in Fig. 6 dargestellten mit denselben Bezugszeichen versehen. Die vorstehend erwähnte untere Trennschicht 313 und die Dämpfungsschicht 312 sind durch Schrauben an der Grundplatte 311 befestigt. Das Unterteil 310 weist für jeden auszurichtenden Rohling 20 mindestens zwei Führungsstifte 316 auf, die in die entsprechenden in dem Rohling 20 vorgesehenen Bohrungen 22 einführbar sind. Die zwei Führungsstifte 316 sind in Bohrungen vorgesehen, die sowohl die Grundplatte 311 als auch die Schichten 312, 313 durchdringen. Diese Bohrungen sind mit der Druckleitung 341 verbunden, die wiederum über Druckanschlüsse 342 an den in Fig. 7 nicht dargestellten Druckerzeuger 340 angeschlossen ist. Mittels der Druckleitung 341 können die Führungsstifte 316 wie vorstehend beschrieben wahlweise nach erfolgtem Ausrichten des Rohlings 20 auf dem Unterteil 310 durch einen Unterdruck eingezogen oder vor dem Ausrichten des Rohlings 20 durch einen Überdruck ausgefahren werden. Darüber hinaus ist in dem Unterteil 310 mindestens eine Ansaugbohrung 319 zum Ansaugen des Rohlings 20 und/oder des Trägerblatts 10 an die untere Trennschicht 313 des Unterteils 310 vorgesehen. Eine Lampe 318 dient zum Beleuchten eines nicht dargestellten Fadenkreuzes auf der Oberfläche der unteren Trennschicht 313. Zum Ausrichten des Trägerblatts 10 auf dem Rohling 20 greifen entweder einige der Führungsstifte 316 in entsprechende auf dem Trägerblatt 10 vorgesehene Löcher 16 ein, oder es werden alternativ dazu die auf dem Trägerblatt 10 vorgesehenen Fadenkreuze mit den von unten beleuchteten Fadenkreuzen auf der Oberfläche der unteren Trennschicht 313 zur Deckung gebracht.

Fig. 8 stellt einen Längsschnitt durch ein Beispiel für einen Führungsstift 316 dar, der gemäß einer Ausführungsform zur Aufnahme in dem Unterteil 310 der Flachpresse 300a vorgespannt ist. Der Führungsstift 316 ist in Fig. 8 in einem mittels eines Überdrucks aus dem Unterteil 310 herausbewegten Zustand dargestellt. Der Führungsstift 316 wird von einer sowohl die untere Trennschicht 313 als auch die Dämpfungsschicht 312 durchdringenden Bohrung aufgenommen. Wie vorstehend erwähnt ist der Führungsstift 316 mittels einer Feder 316a in dem Unterteil 310 der Flachpresse 300a vorgespannt, wenn der Rohling 20 und das Trägerblatt 10 nach dem Ausrichten aneinander angepreßt werden. Vor der Entnahme des Zifferblatts 30 von dem Unterteil 310 der Flachpresse 300a wird der Führungsstift 316 mittels eines über die Druckleitung 341 zugeführten Drucks gegen die Federkraft der Feder 316a aus dem Unterteil 310 herausgefahren. Dabei hebt der Führungsstift 316 mittels eines in Eingriff mit der Unterfläche des Rohlings 20 zu bringenden Absatzes 316b den Rohling 20 und das Trägerblatt 10 von dem Unterteil 310 ab. Dadurch wird ein eventuelles Haften des Zifferblatts 30 an dem Unterteil 310 der Flachpresse 300a durch zwischen der Unterseite der Trägerplatte bzw. des Zifferblatts 30 und der unteren Trennschicht 313 verbliebene Nebenprodukte des Herstellvorgangs überwunden. Außerdem wird dadurch die Entnahme des Zifferblatts 30 aus der Flachpresse 300a beispielsweise durch eine automatische Greifeinrichtung erleichtert. Es ist ebenfalls möglich, daß der Führungsstift 316 beim Auflegen des Rohlings 20 und des Trägerblatts 10 zu deren Führung aus dem Unterteil 310 vorsteht, so daß der Rohling 20 auf den Absatz 316b des Führungsstifts 316 aufgelegt werden kann. Derartige Führungsstifte werden vor dem Schließen der Flachpresse 300a zum Anpressen mittels eines Unterdrucks gegen die Federkraft der vorstehend erwähnten Federn in das Unterteil 310 der Flachpresse 300a eingezogen.

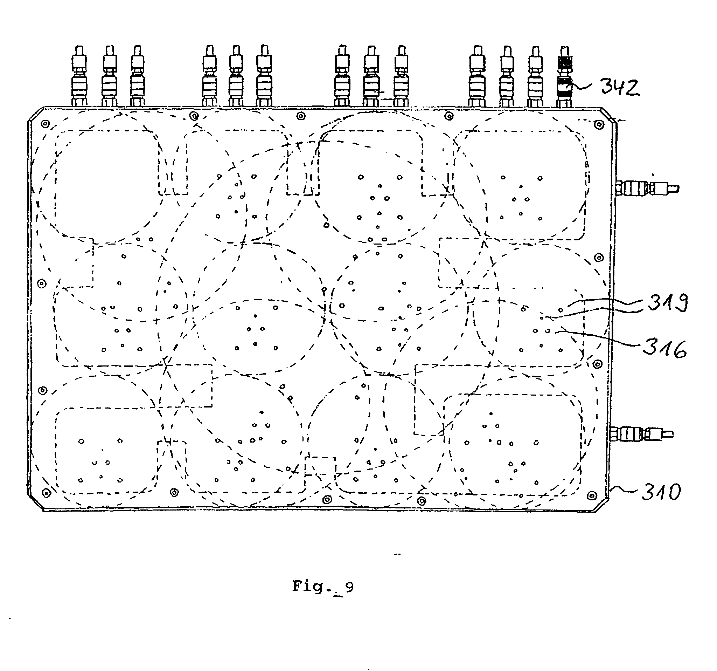

Eine Draufsicht auf ein Beispiel eines Unterteils 310 der Flachpresse 300a ist in Fig. 9 abgebildet. Aus Gründen der besseren Übersichtlichkeit sind in dieser Darstellung weder die Lampen 318 noch die Fadenkreuze abgebildet. Wie aus Fig. 9 ersichtlich ist, kann das Unterteil 310 an der Oberfläche der unteren Trennschicht 313 gleichzeitig eine Vielzahl von Rohlingen verschiedener Formen und Größen aufnehmen, die dann mittels der entsprechenden Führungsstifte 316 in der Flachpresse 300a ausgerichtet werden. Die verschiedenen Möglichkeiten der Aufnahme von Rohlingen sind durch strichpunktierte Linien für Rohlinge mit kreisförmigem Querschnitt und durch gestrichelte Linien für Rohlinge mit nahezu rechteckförmigen Querschnitt dargestellt. Je nach Größe des aufzunehmenden Rohlings muß dieser durch die Ansaugbohrungen 319 mit entsprechendem Durchmesser angesaugt werden. Daher weisen die auf der Oberfläche der unteren Trennschicht 313 vorhandenen Ansaugbohrungen 319 verschiedene Durchmesser auf. Das Trägerblatt 10 kann nach dem Ausrichten in der Flachpresse 300a entweder direkt mittels einer in dem Unterteil 310 vorgesehenen Ansaugbohrung 319 oder durch die den Rohling 20 durchdringende Bohrung 21 hindurch auf dem Rohling 20 durch einen Unterdruck angesaugt werden. In dem letzteren Fall kann oder sollte der Durchmesser der Bohrung des Unterteils 310 größer sein als der des Rohlings 20. Alternativ kann der Rohling 20 mittels einer zusätzlich in dem Unterteil 310 vorgesehenen Bohrung, die einem geschlossenflächigen Rohlingsabschnitt gegenüberliegt, auf der unteren Trennschicht 313 angesaugt werden. An den Außenwänden des Unterteils 310 sind die Druckanschlüsse 342 zur Verbindung der Druckleitung 341 mit dem Druckerzeuger 340 vorgesehen. Mittels der Vielzahl von Druckanschlüssen 342 sind sämtliche Ansaugbohrungen 319 durch eine nicht dargestellte Steuereinheit entweder einzeln oder in Gruppen ansteuerbar. Auf diese Weise können gleichzeitig Rohlinge verschiedener Formen und Größen oder weniger Rohlinge als die von der Flachpresse 300a maximal aufnehmbare Anzahl angesaugt werden.

Anstelle der in den Figuren 6, 7 und 9 dargestellten Flachpresse 300a kann zum Erweichen des Tonerbilds 10 und Anpressen des Tonerbilds 10 an den Rohling 20 gemäß einem zweiten Ausführungsbeispiel der Erfindung eine Walzenpresse verwendet werden.

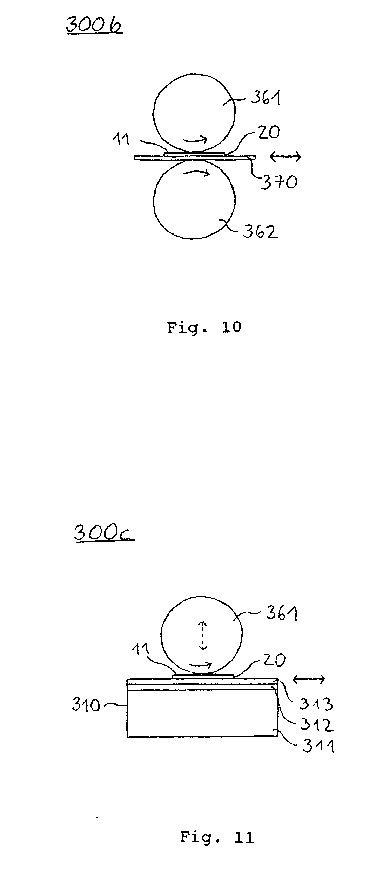

Fig. 10 zeigt einen Längsschnitt durch die Walzenpresse 300b gemäß einem zweiten Ausführungsbeispiel der Erfindung. Die Walzenpresse 300b ist durch mindestens ein Paar einander gegenüberliegend angeordnete Preßwalzen 361, 362 gebildet, die eine Kraft senkrecht zur Ebene des Trägerblatts 10 mit dem Tonerbild 11 und des Rohlings 20 ausüben und damit das Trägerblatt 10 an den Rohling 20 anpressen. Zum Zuführen des Trägerblatts 10 und des Rohlings 20 in die Walzenpresse 300b und zum Entnehmen des Zifferblatts 30 aus der Walzenpresse 300b kann mindestens eine der Preßwalzen 361, 362 senkrecht zu der Ebene des Trägerblatts 10 und des Rohlings 20 bewegbar sein.

Nach dem Zuführen des Trägerblatts 10 und des Rohlings 20 in die Walzenpresse 300b werden das Tonerbild 11 und der Rohling 20 in der vorbestimmten Position auf einer Halteplatte 370 ausgerichtet und festgelegt. Gemäß diesem Ausführungsbeispiel kann das Ausrichten und anschließende Festlegen des Tonerbilds 11 und des Rohlings 20 beispielsweise mittels elektrostatischer Aufladung erfolgen. Dabei werden vorzugsweise das Trägerblatt 10 und die aus einem elektrisch leitenden Material bestehende Halteplatte 370 auf eine Polarität und der Rohling 20 auf die entgegengesetzte Polarität elektrostatisch aufgeladen, wodurch das Trägerblatt 10 an dem Rohling 20 und der Rohling 20 fest an der Halteplatte 370 haften. Die elektrostatische Aufladung kann beispielsweise mittels in der Walzenpresse 300b vorgesehener Ladebürsten oder Ladeklingen erfolgen.

Nachdem das Tonerbild 11 und der Rohling 20 auf der Halteplatte 370 ausgerichtet worden sind, wird die Halteplatte 370 mit Tonerbild 11 und Rohling 20 in einen Spalt zwischen den Preßwalzen 361, 362 eingeführt. Dadurch wird durch die Preßwalzen 361, 362 eine Kraft senkrecht zur Ebene der Halteplatte 370, des Trägerblatts 10 und des Rohlings 20 ausgeübt, wodurch das Tonerbild 11 an den Rohling 20 angepreßt wird. Die Halteplatte 370 wird zu der Seite des Spalts ausgetragen, die der Seite des Einzugs gegenüberliegt, weil sich die Preßwalzen 361, 362 in jeweils verschiedene Richtungen drehen. Wie bei dem ersten Ausführungsbeispiel kann das Trägerblatt 10 von dem übertragenen Tonerbild 11 abgezogen und das Zifferblatt 30 aus der Walzenpresse 300b entnommen werden, denn nach dem Anpressen haftet das Tonerbild 11 fest an der durch den Rohling 20 gebildeten Trägerplatte.

Mindestens eine der Preßwalzen 361, 362 der Walzenpresse 300b kann außerdem heizbar sein. In diesem Fall wird die Halteplatte 370 mit dem an dem Rohling 20 haftenden Tonerbild 11 durch die Preßwalzen 361, 362 erwärmt, die von außen zugeführte elektrische Energie in Wärmeenergie umwandeln. Durch die Erwärmung erweicht das Tonerbild 11 und geht vollständig auf den Rohling 20 über. Das fertig bedruckte Zifferblatt 30 wird auf der Halteplatte 370 an der der Seite des Einzugs gegenüberliegenden Seite der Walzenpresse 300b ausgetragen. Sowohl Temperatur als auch Drehzahl der heizbaren Preßwalze 361, 362 werden derart ausgewählt, daß eine vollständige Übertragung des Tonerbilds 11 auf den Rohling 20 gewährleistet ist.

Analog zum ersten Ausführungsbeispiel können sowohl eine als auch beide der Preßwalzen 361, 362 mit einer Ausgleichsschicht beispielsweise aus einem Baumwollgewebe zum Aufnehmen von Flüssigkeiten und Dämpfen beschichtet sein.

Es ist ebenfalls möglich, das Tonerbild 11 und den Rohling 20 mittels Aufbringen eines besonderen Klebstoffes zwischen dem Tonerbild 11 und dem Rohling 20 festzulegen, wobei sich der Klebstoff selbständig auflöst, wenn er über einen bestimmten Zeitraum einer bestimmten Temperatur ausgesetzt wird.

Während gemäß dem ersten Ausführungsbeispiel eine Flächenkraft auf das Trägerblatt 10 und den Rohling 20 wirkt, üben die Preßwalzen 361, 362 der Walzenpresse 300b gemäß dem zweiten Ausführungsbeispiel eine Linienkraft aus. Dadurch kann die Kraftverteilung zum Anpressen des Trägerblatts 10 auf den Rohling 20 feiner dosiert und besser vergleichmäßigt werden, um die Druckqualität des Zifferblatts weiter zu verbessern.

Da sich wie vorstehend beschrieben insbesondere das zweite Ausführungsbeispiel für eine Massenfertigung von Zifferblättern anbietet, kann die Halteplatte 370 zweckmäßigerweise durch ein Förderband ersetzt werden, das der Walzenpresse 300b laufend Rohlinge und Tonerbilder zuführt und die fertig bedruckten Zifferblätter wieder aus der Walzenpresse 300b austrägt. In diesem Fall werden die Tonerbilder vorteilhafterweise von einer Endlos-Trägerblattrolle zugeführt.

Obwohl das Ausrichten und das Festlegen des Tonerbilds 11 und des Rohlings 20 mittels elektrostatischer Aufladung und Kleben anhand des zweiten Ausführungsbeispiels beschrieben worden sind, sind diese Ausricht- und Festlegeverfahren keinesfalls auf die Walzenpresse 300b gemäß dem zweiten Ausführungsbeispiel der Erfindung beschränkt, sondern können gleichermaßen bei der Flachpresse 300a gemäß dem ersten Ausführungsbeispiel und bei dem nachstehend beschriebenen dritten Ausführungsbeispiel angewandt werden.

Gemäß einem dritten Ausführungsbeispiel ist die Anpreßeinrichtung als eine in Fig. 11 im Längsschnitt dargestellte und nachstehend als Kombinationspresse 300c bezeichnete Presse ausgebildet, die ein Unterteil 310 und mindestens eine dem Unterteil 310 gegenüberliegend angeordnete Preßwalze 361 aufweist. Das Unterteil 310 der Kombinationspresse 300c kann den gleichen oder einen ähnlichen Aufbau wie das Unterteil 310 der Flachpresse 300a gemäß dem ersten Ausführungsbeispiel aufweisen. Daher sind in Fig. 11 Bestandteile der Kombinationspresse 300c, die denen der in Fig. 6 vereinfacht dargestellten Flachpresse 300a entsprechen, mit den gleichen Bezugszeichen versehen, so daß hier auf eine wiederholte Beschreibung verzichtet werden kann. Wie bei der Flachpresse 300a gemäß dem ersten Ausführungsbeispiel ist das Unterteil 310 der Kombinationspresse 300c über eine Druckleitung an einen Druckerzeuger angeschlossen, die beide jedoch in Fig. 11 nicht dargestellt sind.

Die Preßwalze 361 kann ähnlich wie die Preßwalzen 361, 362 der Walzenpresse 300b gemäß dem zweiten Ausführungsbeispiel in die in dieser Abbildung durch einen gestrichelten Doppelpfeil angegebenen Richtungen senkrecht zu der Ebene des Trägerblatts 10 und des Rohlings 20 bewegbar sein. Auf diese Weise ist ein Auflegen von Rohling 20 und Trägerblatt 10 auf das Unterteil 310 der Kombinationspresse 300c und die Entnahme des bedruckten Zifferblatts 30 daraus möglich. Im angehobenen Zustand der Preßwalze 361 werden sowohl der Rohling 20 als auch das Trägerblatt 10 der Kombinationspresse 300c zugeführt und mittels irgendeines der vorstehend beschriebenen Ausricht- und Festlegeverfahren in der vorbestimmten Position ausgerichtet. Durch Absenken der Preßwalze 361 wird wie bei dem zweiten Ausführungsbeispiel eine Kraft senkrecht zur Ebene des Trägerblatts 10 und des Rohlings 20 ausgeübt, wodurch das Tonerbild 11 angepreßt wird und von dem Trägerblatt 10 auf den Rohling 20 übergeht. Die Preßwalze 361 kann desweiteren analog zu den Preßwalzen 361, 362 der Walzenpresse 300b gemäß dem zweiten Ausführungsbeispiel zum Erwärmen des Trägerblatts 10 und des Rohlings 20 und Erweichen des Tonerbilds 11 heizbar sein. Nach dem Anpressen des Tonerbilds 11 an den Rohling 20 kann das Trägerblatt 10 wie bei den vorstehend beschriebenen ersten und zweiten Ausführungsbeispielen von dem übertragenen Tonerbild 11 abgezogen werden und das Zifferblatt 30 aus der Kombinationspresse 300c entnommen werden.

Das dritte Ausführungsbeispiel weist gegenüber dem zweiten Ausführungsbeispiel den Vorteil auf, daß keine Halteplatte zur Aufnahme des Rohlings 20 und des Trägerblatts 10 und anstelle des Walzenpaars nur eine einzelne Walze benötigt werden. Dadurch ist neben der auch gemäß dem zweiten Ausführungsbeispiel erhaltenen feinen Dosierung und gleichmäßigen Verteilung des Anpreßdrucks eine besonders kompakte und daher platzsparende Ausbildung der Anpreßeinrichtung möglich.

Das Ausrichten des Rohlings 20 und des Tonerbilds 11 in der vorbestimmten Position kann außerdem durch Anlage an einen Randanschlag erfolgen, wenn das Trägerblatt 10 vorher einer Schneideeinrichtung zugeführt wird. Eine derartige Schneideeinrichtung erfaßt mittels einer elektronischen Bildverarbeitung die Koordinaten der auf dem Trägerblatt 10 vorgesehenen Löcher 16 oder Fadenkreuze und schneidet die äußeren Ränder des Trägerblatts 10 in einer vorbestimmten Beziehung zu den Koordinaten der Löcher 16 oder Fadenkreuze entsprechend ab, so daß eine feste Beziehung zwischen dem Tonerbild 11 und dem mit dem Randanschlag in Eingriff zu bringenden Rand erreicht wird.

Da das Unterteil 310 der Kombinationspresse 300c in die durch einen durchgezogenen Doppelpfeil dargestellten Richtungen parallel zu der Ebene des Rohlings 20 und des Trägerblatts 10 eine translatorische Bewegung ausführen kann, erfolgt der Transport des Trägerblatts 10 und des Rohlings 20 gemäß diesem Ausführungsbeispiel durch das Unterteil 310.

Das Erweichen des Tonerbilds 11 kann wie vorstehend beschrieben gemäß einem der ersten bis dritten Ausführungsbeispiele durch Erwärmen erfolgen. Es ist jedoch auch möglich, daß das Tonerbild 11 auf chemischem Weg durch Aufbringen eines Lösungsmittels zwischen dem Rohling 20 und einem Trägerblatt 10' erweicht wird, das in diesem Fall eine andere Zusammensetzung als das bei den vorstehend beschriebenen Ausführungsbeispielen verwendete Trägerblatt 10 haben kann. Es ist auch möglich, daß auf das Tonerbild 11, nachdem das Trägerblatt 10' auf dem Rohling 20 ausgerichtet worden ist, ein entsprechendes Lösungsmittel auf die Rückseite des Trägerblattes 10' aufgebracht wird, das das Tonerbild 11 von dem Trägerblatt 10' ablöst. Durch nachfolgendes Anpressen des Trägerblatts 10 an den Rohling 20 haftet das Tonerbild 11 wie bei den vorstehend beschriebenen Ausgestaltungen der Erfindung an der durch den Rohling 20 gebildeten Trägerplatte.

Zum Erhöhen der Beständigkeit des bedruckten Zifferblatts 30 im allgemeinen und insbesondere gegenüber in dem Meßgerät vorgesehenen Füllmedien wie beispielsweise Dämpfungsflüssigkeiten kann das Zifferblatt 30 nach dem Schritt der Entnahme aus der Anpreßeinrichtung 300, d.h. dem Schritt 8 gemäß Fig. 3, einer Wärmebehandlung unterzogen werden. Dabei kann das Erweichen des Tonerbilds 11 und das Anpressen des Tonerbilds 11 an den Rohling 20 gemäß einem der vorstehend beschriebenen ersten bis dritten Ausführungsbeispiele erfolgen. Anschließend wird das Zifferblatt 30 einer in Fig. 4 gestrichelt dargestellten Wärmebehandlungseinrichtung 400 wie einem Wärmeschrank oder Ofen zugeführt, in der es für einen vorbestimmten Zeitraum einer erhöhten Temperatur ausgesetzt wird. Während der Wärmebehandlung liegt die mit dem Aufdruck versehene Oberfläche des Zifferblatts 30 frei. Vorteilhafterweise betragen der vorbestimmte Zeitraum eine Minute und die erhöhte Temperatur 150 °C. Um eine Vereinfachung der Anordnung und eine Senkung der Investitionskosten zu erreichen, kann die Aushärtung des Toners auf dem Zifferblatt 30 auch mittels einer Infrarotlampe erfolgen.

Es versteht sich von selbst, daß die erfindungsgemäßen Verfahren und die erfindungsgemäßen Vorrichtungen bei der Herstellung sowohl von einfarbigen als auch von mehrfarbigen Zifferblättern gleichermaßen gut eingesetzt werden können. Dabei ist die Anzahl der Farben im Gegensatz zu herkömmlichen Verfahren unbegrenzt. Sämtliche Farben werden außerdem in einem Vorgang gleichzeitig übertragen.

Es ist ein Verfahren und eine Vorrichtung zur Herstellung eines Zifferblatts durch Bedrucken eines Rohlings mit einem Aufdruck beschrieben, die eine kostengünstige Fertigung in sehr hoher Qualität auch bei kleinen Stückzahlen ermöglichen. Mittels einer Eingabeeinrichtung eingegebene Daten werden einer Datenverwaltungseinrichtung zugeführt, die Zifferblatt-Muster auf einer durch die eingegebenen Daten definierten Aufdruckvorlage positioniert. Ist ein Muster nicht gespeichert, wird von einer Entwurfseinrichtung ein neues Muster angefordert und der Datenverwaltungseinrichtung zugeführt, die die Aufdruckvorlage in eine Ausgabeeinrichtung eingibt. Die Ausgabeeinrichtung erzeugt der Aufdruckvorlage entsprechende Zeichnungsdaten und gibt diese an eine Druckeinrichtung aus, die ein vorfixiertes Tonerbild auf einem Trägerblatt erzeugt. Der zu bedruckende Rohling und das Trägerblatt mit dem zu dem Aufdruck spiegelverkehrten Tonerbild werden einer Anpreßeinrichtung zugeführt und der Rohling in einer vorbestimmten Position sowie das Trägerblatt in einer der vorbestimmten Position des Rohlings entsprechenden Position ausgerichtet. Durch Erweichen des Tonerbilds und Anpressen des Tonerbilds an den Rohling geht das Tonerbild von dem Trägerblatt auf den Rohling über und bildet zusammen mit dem Rohling ein mit dem Aufdruck versehenes Zifferblatt. Daraufhin kann das Trägerblatt von dem übertragenen Tonerbild entfernt und das Zifferblatt aus der Anpreßeinrichtung entnommen werden. Die Anpreßeinrichtung kann als Flachpresse, Walzenpresse oder Kombination von beiden ausgebildet sein.

## Patentansprüche

1. Verfahren zur Herstellung eines Zifferblatts, bei dem ein Rohling mit einem Aufdruck versehen wird, **gekennzeichnet durch** die Schritte
Erzeugen eines vorfixierten Tonerbilds (11) auf einem Trägerblatt (10), wobei das Tonerbild (11) spiegelverkehrt zu dem Aufdruck (12) ist,
Zuführen des zu bedruckenden Rohlings (20) in eine Anpreßeinrichtung (300) und Ausrichten des Rohlings (20) in einer vorbestimmten Position,
Zuführen des Trägerblatts (10) in die Anpreßeinrichtung (300) zur Anlage des Tonerbilds (11) an dem Rohling (20),
Ausrichten des Trägerblatts (10) in einer der vorbestimmten Position des Rohlings (20) entsprechenden Position,
Erweichen des ausgerichteten Tonerbilds (11),
Anpressen des erweichten Tonerbilds (11) an den Rohling (20) und **dadurch** Übertragen des Tonerbildes (11) auf den Rohling (20) zur Bildung des Aufdrucks (12),
Abziehen des Trägerblatts (10) von dem übertragenen Tonerbild (11) und
Entnehmen des Zifferblatts (30) aus der Anpreßeinrichtung (300).

2. Verfahren nach Anspruch 1, **gekennzeichnet durch** die zusätzlichen Schritte
Eingeben von Daten, die eine zu erstellende und aus zumindest einem Muster bestehende Aufdruckvorlage definieren,
Zuordnen und Positionieren von gespeicherten Mustern auf der Aufdruckvorlage entsprechend den die zu erstellende Aufdruckvorlage definierenden Daten, wobei bei einem nicht gespeicherten Muster ein entsprechender Muster-Entwurf angefordert wird und das neu entworfene Muster gespeichert wird, und
Ausgeben von die Aufdruckvorlage beschreibenden Zeichnungsdaten, wobei das zu erzeugende, vorfixierte Tonerbild (11) den Zeichnungsdaten entspricht.

3. Verfahren nach Anspruch 2, **dadurch gekennzeichnet, daß** die Zeichnungsdaten in einer Seitenbeschreibungssprache abgelegt sind.

4. Verfahren nach einem der vorangehenden Ansprüche, **dadurch gekennzeichnet, daß** das Erweichen des Tonerbilds (11) durch Erwärmen bewirkt wird.

5. Verfahren nach Anspruch 4, **dadurch gekennzeichnet, daß** zum Erweichen des Tonerbilds (11) dieses für einen Zeitraum von 30 s einer Temperatur von 100 °C ausgesetzt wird.

6. Verfahren nach einem der vorangehenden Ansprüche, **dadurch gekennzeichnet, daß** das Anpressen des Tonerbilds (11) an den Rohling (20) in einer Flachpresse (300a) erfolgt.

7. Verfahren nach Anspruch 6, **dadurch gekennzeichnet, daß** das ausgerichtete Trägerblatt (10) an seiner von dem Rohling (20) abgewandten Seite mit einer Unebenheiten des Trägerblatts (10) und des Rohlings (20) egalisierenden Ausgleichsschicht (324) abgedeckt wird.

8. Verfahren nach Anspruch 7, **dadurch gekennzeichnet, daß** die Ausgleichsschicht (324) Flüssigkeiten und Dämpfe aufnimmt.

9. Verfahren nach einem der vorangehenden Ansprüche, **dadurch gekennzeichnet, daß** das Zifferblatt (30) für einen vorbestimmten Zeitraum einer erhöhten Temperatur ausgesetzt wird, wobei die mit dem Aufdruck (12) versehene Oberfläche des Zifferblatts (30) freiliegt.

10. Verfahren nach Anspruch 9, **dadurch gekennzeichnet, daß** der vorbestimmte Zeitraum ca. eine Minute und die erhöhte Temperatur ca. 150 °C betragen.

11. Verfahren nach einem der vorangehenden Ansprüche, **dadurch gekennzeichnet, daß** nach dem Ausrichten das Trägerblatt (10) mittels eines Unterdrucks an dem Rohling (20) gehalten wird.

12. Verfahren nach einem der Ansprüche 6 bis 8, **dadurch gekennzeichnet, daß** nach dem Ausrichten das Trägerblatt (10) mittels eines Unterdrucks in der Flachpresse (300a) gehalten wird.

13. Verfahren nach Anspruch 1 oder 2, **dadurch gekennzeichnet, daß** das Erweichen des ausgerichteten Tonerbilds (11) auf chemischem Weg erfolgt.

14. Vorrichtung zur Herstellung eines Zifferblatts durch Bedrucken eines Rohlings mit einem Aufdruck, **gekennzeichnet durch**
eine Druckeinrichtung (200) zum Erzeugen eines vorfixierten Tonerbildes (11) auf einem Trägerblatt (10), wobei das Tonerbild (11) spiegelverkehrt zu dem Aufdruck (12) ist,
eine Ausrichteinrichtung (316, 318, 319) zum Ausrichten des Rohlings (20) in einer vorbestimmten Position und des Trägerblatts (10) in einer Position, die der vorbestimmten Position des Rohlings (20) entspricht, und
eine Anpreßeinrichtung (300) zum Ausüben einer Kraft in einer Richtung senkrecht zu der Ebene des Trägerblatts (10) und des Rohlings (20) und zum Anpressen des Tonerbildes (11) an den Rohling (20).

15. Vorrichtung nach Anspruch 14, **gekennzeichnet durch**
eine Eingabeeinrichtung (110) zur Eingabe von Daten, die eine zu erstellende und aus zumindest einem Muster bestehende Aufdruckvorlage definieren,
eine Entwurfseinrichtung (130) zum Entwurf eines Musters,
eine Datenverwaltungseinrichtung (120) zur Zuordnung und Positionierung von gespeicherten Mustern auf der Aufdruckvorlage entsprechend den die zu erstellende Aufdruckvorlage definierenden Daten, wobei die Datenverwaltungseinrichtung (120) bei einem nicht gespeicherten Muster einen entsprechenden Muster-Entwurf von der Entwurfseinrichtung (130) anfordert und das neu entworfene Muster speichert,
eine Ausgabeeinrichtung (140) zur Ausgabe von die Aufdruckvorlage beschreibenden Zeichnungsdaten an die Druckeinrichtung (200), die das vorfixierte Tonerbild (11) entsprechend den Zeichnungsdaten erzeugt.

16. Vorrichtung nach Anspruch 15, **dadurch gekennzeichnet, daß** die Zeichnungsdaten in einer Seitenbeschreibungssprache abgelegt sind.

17. Vorrichtung nach einem der Ansprüche 14 bis 16, **dadurch gekennzeichnet, daß** die Anpreßeinrichtung (300) heizbar ist.

18. Vorrichtung nach einem der Ansprüche 14 bis 17, **dadurch gekennzeichnet, daß** die Anpreßeinrichtung (300) durch eine Flachpresse (300a) gebildet ist, die ein Unterteil (310) zur Aufnahme des Rohlings (20) aufweist.

19. Vorrichtung nach Anspruch 18, **dadurch gekennzeichnet, daß** das Unterteil (310) der Flachpresse (300a) für jeden auszurichtenden Rohling (20) mindestens zwei Führungsstifte (316) aufweist, die in entsprechende, den Rohling (20) durchdringende Bohrungen (22) eingreifen können.

20. Vorrichtung nach Anspruch 19, **dadurch gekennzeichnet, daß** die Führungsstifte (316) in das Unterteil (310) der Flachpresse (300a) versenkbar sind und in Richtung ihrer Eingriffsstellung unter Federvorspannung stehen.

21. Vorrichtung nach einem der Ansprüche 14 bis 16, **dadurch gekennzeichnet, daß** die Anpreßeinrichtung (300) durch mindestens ein Paar einander gegenüberliegend angeordnete Preßwalzen (361, 362) gebildet ist.

22. Vorrichtung nach einem der Ansprüche 14 bis 16, **dadurch gekennzeichnet, daß** die Anpreßeinrichtung (300) durch ein Unterteil (310) zur Aufnahme des Rohlings (20) und mindestens eine dem Unterteil (310) gegenüberliegend angeordnete Preßwalze (361) gebildet ist.

23. Vorrichtung nach einem der Ansprüche 18 bis 20 oder 22, **dadurch gekennzeichnet, daß** das Unterteil (310) der Anpreßeinrichtung (300)
eine Grundplatte (311) zum Aufstellen des Unterteils (310) auf einem Untergrund,
eine die Grundplatte (311) abdeckende Dämpfungsschicht (312) und
eine die Dämpfungsschicht (312) abdeckende Trennschicht (313) aufweist, wobei die Dämpfungsschicht (312) und die Trennschicht (313) jeweils Unebenheiten der Grundplatte (311) ausgleichen.

24. Vorrichtung nach einem der Ansprüche 18 bis 20, **dadurch gekennzeichnet, daß** die Flachpresse (300a) ein Oberteil (320) aufweist, das
eine Heizplatte (322) zum Erwärmen des Trägerblatts (10),
eine Ausgleichsschicht (324) zum Aufnehmen von Flüssigkeiten und Dämpfen und
eine zwischen der Heizplatte (322) und der Ausgleichsschicht (324) angeordnete Trennschicht (323) hat, die ein Haften der Ausgleichsschicht (324) an der Heizplatte (322) verhindert.

25. Vorrichtung nach Anspruch 23 oder 24, **dadurch gekennzeichnet, daß** die Trennschicht (313; 323) wärmeisolierend ist und aus Polytetrafluoräthylen (PTFE) besteht.

26. Vorrichtung nach einem der Ansprüche 14 bis 25, **gekennzeichnet durch** eine Einrichtung (400) zum Wärmebehandeln des Zifferblatts (30).

## Claims

1. Method for manufacturing a dial wherein a blank is provided with an imprint, **characterized by** the following steps
production of a pre-fixed toner image (11) on a carrier sheet (10), the toner image (11) being a mirror-inversion of the imprint (12),
feeding the blank (20) to be imprinted into a pressing device (300) and aligning the blank (20) in a predetermined position,
feeding the carrier sheet (10) into the pressing device (300) to lay the toner image (11) on the blank (20),
aligning the carrier sheet (10) in a position corresponding to the predetermined position of the blank (20),
physically softening the aligned toner image (11),
pressing the softened toner image (11) on to the blank (20), thereby transferring the toner image (11) on to the blank (20) to make the imprint (12),
stripping the carrier sheet (10) from the transferred toner image (11) and removing the dial (30) from the pressing device (300).

2. Method according to Claim 1, **characterized by** the following additional steps
entry of data defining a master imprint, consisting of at least one pattern, to be produced
assigning stored patterns to the master imprint and positioning them thereon in accordance with the data defining the master imprint to be produced; in the case of a pattern which has not been stored, requesting a corresponding pattern design and storing the newly designed pattern, and
output of drawing data describing the master imprint, such that the pre-fixed toner image (11) to be produced corresponds to the drawing data.

3. Method according to Claim 2, **characterized in that** the drawing data are filed in a page description language.

4. Method according to any one of the preceding claims, **characterized in that** the softening of the toner image (11) is effected by heating.

5. Method according to Claim 4, **characterized in that** the toner image (11) is softened by subjecting it to a temperature of 100°C for a period of 30 s.

6. Method according to any one of the preceding claims, **characterized in that** the pressing of the toner image (11) on to the blank (20) is performed in a flat press (300a).

7. Method according to Claim 6, **characterized in that** the aligned carrier sheet (10) is covered, on the side facing away from the blank (20), with a compensating layer (324) equalizing unevennesses of the carrier sheet (10) and blank (20).

8. Method according to Claim 7, **characterized in that** the compensating layer (324) absorbs liquids and vapours.

9. Method according to any one of the preceding claims, **characterized in that** the dial (30) is subjected to increased temperature for a predetermined period with the dial surface that has been provided with the imprint (12) exposed.

10. Method according to Claim 9, **characterized in that** the predetermined period is approx. one minute, and the increased temperature is approx. 150°C.

11. Method according to any one of the preceding claims, **characterized in that** after alignment, the carrier sheet (10) is held on the blank (20) by means of a partial vacuum.

12. Method according to any one of Claims 6 to 8, **characterized in that** after alignment, the carrier sheet (10) is held in the flat press (300a) by means of a partial vacuum.

13. Method according to Claim 1 or Claim 2, **characterized in that** the softening of the aligned toner image (11) is effected chemically.

14. Apparatus for manufacturing a dial by providing a blank with an imprint, **characterized by**
a printing device (200) for producing a pre-fixed toner image (11) on a carrier sheet (10), the toner image (11) being a mirror-inversion of the imprint (12),
an alignment device (316, 318, 319) for aligning the blank (20) in a predetermined position and the carrier sheet (10) in a position corresponding to the predetermined position of the blank (20), and
a pressing device (300) for exerting a force in a direction perpendicular to the plane of the carrier sheet (10) and blank (20), and for pressing the toner image (11) on to the blank (20).

15. Apparatus according to Claim 14, **characterized by**
an input device (110) for the entry of data defining a master imprint, consisting of at least one pattern, to be produced,
a design device (130) for designing a pattern,
a data management device (120) for assigning stored patterns to the master imprint and positioning them thereon in accordance with the data defining the master imprint to be produced; in the case of a pattern which has not been stored, the data management device (120) requesting a corresponding pattern-design from the design device (130) and storing the newly designed pattern,
an output device (140) for the output of drawing data describing the master imprint to the printing device (200) which produces the pre-fixed toner image (11) in accordance with the drawing data.

16. Apparatus according to Claim 15, **characterized in that** the drawing data are filed in a page description language.

17. Apparatus according to any one of Claims 14 to 16, **characterized in that** the pressing device (300) is heatable.

18. Apparatus according to any one of Claims 14 to 17, **characterized in that** the pressing device (300) is formed by a flat press (300a) which has a lower part (310) to receive the blank (20).

19. Apparatus according to Claim 18, **characterized in that** the lower part (310) of the flat press (300a) has at least two guide pins (316) for every blank (20) to be aligned which are engageable in corresponding holes (22) through the blank (20).

20. Apparatus according to Claim 19, **characterized in that** the guide pins (316) are retractable into the lower part (310) of the flat press (300a) and are spring-loaded in the direction towards their engaged position.

21. Apparatus according to any one of Claims 14 to 16, **characterized in that** the pressing device (300) is formed by at least one pair of opposing press rolls (361, 362).

22. Apparatus according to any one of Claims 14 to 16, **characterized in that** the pressing device (300) is formed by a lower part (310) to receive the blank (20) and at least one press roll (361) opposing the lower part (310).

23. Apparatus according to any one of Claims 18 to 20 and 22, **characterized in that** the lower part (310) of the pressing device (300) has
a baseplate (311) for mounting the lower part (310) on a supporting surface,
a cushioning layer (312) covering the baseplate (311) and
a separating layer (313) covering the cushioning layer (312), the cushioning layer (312) and the separating layer (313) both compensating unevennesses of the baseplate (311).

24. Apparatus according to any one of Claims 18 to 20, **characterized in that** the flat press (300a) has an upper part (320) which has
a heating plate (322) for heating the carrier sheet (10),
a compensating layer (324) for absorbing liquids and vapours and
a separating layer (323) arranged between the heating plate (322) and the compensating layer (324) and preventing the compensating layer (324) from sticking to the heating plate (322).

25. Apparatus according to Claim 23 or Claim 24, **characterized in that** the separating layer (313; 323) is heat-insulating and consists of polytetrafluoroethylene (PTFE).

26. Apparatus according to any one of Claims 14 to 25, **characterized by** a device (400) for heat-treating the dial (30).

## Revendications

1. Procédé de fabrication d'un cadran, dans lequel une ébauche est pourvue d'un motif imprimé, **caractérisé par** les étapes suivantes :
produire une image toner (11) préfixée sur une feuille de support (10), l'image toner (11) étant dans une symétrie inverse par rapport au motif imprimé (12),
amener l'ébauche (20) à imprimer dans un dispositif de pression (300) et orienter l'ébauche (20) dans une position prédéterminée,
amener la feuille de support (10) dans le dispositif de pression (300) pour appliquer l'image toner (11) contre l'ébauche (20),
orienter la feuille de support (10) dans une position correspondant à la position prédéterminée de l'ébauche (20),
ramollir l'image toner (11) orientée,
presser l'image toner (11) ramollie contre l'ébauche (20) et transférer ainsi l'image toner (11) sur l'ébauche (20) pour former le motif imprimé (12),
retirer la feuille de support (10) de l'image toner (11) transférée et
enlever le cadran (30) du dispositif de pression (300).

2. Procédé selon la revendication 1, **caractérisé par** les étapes supplémentaires suivantes :
introduire des données qui définissent un original d'impression à réaliser constitué d'au moins un dessin,
affecter et positionner des dessins mémorisés sur l'original d'impression conformément aux données qui définissent l'original d'impression à réaliser, un projet de dessin approprié étant demandé dans le cas d'un dessin non mémorisé, et le nouveau dessin projeté étant mémorisé, et
sortir les données graphiques qui décrivent l'original d'impression, l'image toner (11) préfixée à produire correspondant aux données graphiques.

3. Procédé selon la revendication 2, **caractérisé en ce que** les données graphiques sont enregistrées dans un langage de description de page.

4. Procédé selon l'une des revendications précédentes, **caractérisé en ce que** le ramollissement de l'image toner (11) est provoqué par échauffement.

5. Procédé selon la revendication 4, **caractérisé en ce que** pour ramollir l'image toner (11) celle-ci est soumise à une température de 100 °C pendant un laps de temps de 30 s.

6. Procédé selon l'une des revendications précédentes, **caractérisé en ce que** la pression de l'image toner (11) contre l'ébauche (20) s'effectue dans une presse plate (300a).

7. Procédé selon la revendication 6, **caractérisé en ce que** la feuille de support (10) orientée est recouverte, sur sa face tournée à l'opposé de l'ébauche (20), d'une couche de compensation (324) qui égalise des inégalités de la feuille de support (10) et de l'ébauche (20).

8. Procédé selon la revendication 7, **caractérisé en ce que** la couche de compensation (324) absorbe des liquides et des vapeurs.

9. Procédé selon l'une des revendications précédentes, **caractérisé en ce que** le cadran (30) est soumis à une température accrue pendant un laps de temps prédéterminé, la surface du cadran (30) pourvue du motif imprimé (12) étant dégagée.

10. Procédé selon la revendication 9, **caractérisé en ce que** le laps de temps prédéterminé est d'environ une minute et la température accrue est d'environ 150 °C.

11. Procédé selon l'une des revendications précédentes, **caractérisé en ce qu'**après l'orientation, la feuille de support (10) est maintenue contre l'ébauche (20) au moyen d'une dépression.

12. Procédé selon l'une des revendications 6 à 8, **caractérisé en ce qu'**après l'orientation la feuille de support est maintenue dans la presse plate (300a) au moyen d'une dépression.

13. Procédé selon la revendication 1 ou 2, **caractérisé en ce que** le ramollissement de l'image toner (11) orientée s'effectue par voie chimique.

14. Dispositif de fabrication d'un cadran par impression d'un motif sur une ébauche, **caractérisé par** :
un dispositif d'impression (200) pour produire une image toner (11) préfixée sur une feuille de support (10), l'image toner (11) étant dans une symétrie inverse par rapport au motif imprimé (12),
un dispositif d'orientation (316, 318, 319) pour l'orientation de l'ébauche (20) dans une position prédéterminée et de la feuille de support (10) dans une position qui correspond à la position prédéterminée de l'ébauche (20) et,
un dispositif de pression (300) pour exercer une force dans une direction perpendiculaire au plan de la feuille de support (10) et de l'ébauche (20) et pour presser l'image toner (11) contre l'ébauche (20).

15. Dispositif selon la revendication 14, **caractérisé par**
un dispositif de saisie (110) pour saisir des données qui définissent un original d'impression à réaliser constitué d'au moins un dessin,
un dispositif de conception (130) pour concevoir un dessin,
un dispositif de gestion de données (120) pour affecter et positionner des dessins mémorisés sur l'original d'impression, conformément aux données qui définissent l'original d'impression à réaliser, le dispositif de gestion de données (120) demandant au du dispositif de conception (130) un projet de dessin approprié dans le cas d'un dessin non mémorisé, et mémorisant le nouveau dessin projeté,
un dispositif de sortie (140) pour délivrer au dispositif impression (200) des données graphiques décrivant l'original d'impression, lequel produit l'image toner (11) préfixée conformément aux données graphiques.

16. Dispositif selon la revendication 15, **caractérisé en ce que** les données graphiques sont enregistrées dans un langage de description de page.

17. Dispositif selon l'une des revendications 14 à 16, **caractérisé en ce que** le dispositif de pression (300) peut être chauffé.

18. Dispositif selon l'une des revendications 14 à 17, **caractérisé en ce que** le dispositif de pression (300) est formé par une presse plate (300a) qui comporte une partie inférieure (310) destinée à recevoir l'ébauche (20).

19. Dispositif selon la revendication 18, **caractérisé en ce que** la partie inférieure (310) de la presse plate (300a) comporte, pour chaque ébauche (20) à orienter, au moins deux doigts de guidage (316) qui peuvent s'engager dans des perçages (22) traversant l'ébauche (20).

20. Dispositif selon la revendication 19, **caractérisé en ce que** les doigts de guidage (316) peuvent s'enfoncer dans la partie inférieure (310) de la presse plate (300a) et sont précontraints par un ressort dans la direction de leur position d'engagement.

21. Dispositif selon l'une des revendications 14 à 16, **caractérisé en ce que** le dispositif de pression (300) est formé par au moins une paire de rouleaux de pression (361, 362) disposés en vis-à-vis.

22. Dispositif selon l'une des revendications 14 à 16, **caractérisé en ce que** le dispositif de pression (300) est formé par une partie inférieure (310) destinée à recevoir l'ébauche (20) et par au moins un rouleau de pression (361) disposé face à la partie inférieure (310).

23. Dispositif selon l'une des revendications 18 à 20 ou 22, **caractérisé en ce que** la partie inférieure (310) du dispositif de pression (300) comporte
une plaque de base (311) pour placer la partie inférieure (310) sur un support,
une couche d'amortissement (312) recouvrant la plaque de base (311), et
une couche de séparation (313) qui recouvre la couche d'amortissement (312), la couche d'amortissement (312) et la couche de séparation (313) compensant chacune des inégalités de la plaque de base (311).

24. Dispositif selon l'une des revendications 18 à 20, **caractérisé en ce que** la presse plate (300a) comporte une partie supérieure (320) qui possède
une plaque chauffante (322) pour chauffer la feuille de support (10),
une couche de compensation (324) pour absorber des liquides et des vapeurs et
une couche de séparation (323) qui est disposée entre la plaque chauffante (322) et la couche de compensation (324) et qui empêche que la couche de compensation (324) n'adhère à la plaque chauffante (322).

25. Dispositif selon la revendication 23 ou 24, **caractérisé en ce que** la couche de séparation (313 ; 323) est thermo-isolante et est en polytétrafluoréthylène (PTFE).

26. Dispositif selon l'une des revendications 14 à 25, **caractérisé par** un dispositif (400) pour le traitement thermique du cadran (30).
